# EUROPEAN PATENT SPECIFICATION

(11) **EP 1 974 951 B1**
(45) Date of publication and mention of the grant of the patent: **29.12.2010**
(21) Application number: 08006345.6
(22) Date of filing: 31.03.2008
(51) Int. Cl.: B41M 5/52

(54) **Thermal transfer image-receiving sheet**
Wärmeübertragungsbildaufnehmendes Blatt
Feuille à réception d'image de transfert thermique

(30) Priority: 30.03.2007 JP 2007092238
(43) Date of publication of application: 01.10.2008
(73) Proprietor: FUJIFILM Corporation, Minato-ku Tokyo (JP)
(72) Inventor: Yoshitani, Toshihide, Minami-ashigara-shi, Kanagawa 250-0193 (JP); Ono, Wataru, Fujinomiya-shi Shizuoka 418-8666 (JP)
(74) Representative: HOFFMANN EITLE

(56) References cited:
- EP-A- 1 295 914
- WO-A-00/77102
- JP-A- 62 156 172

## Description

### BACKGROUND OF THE INVENTION

### FIELD OF THE INVENTION

The present invention relates to a thermal transfer image-receiving sheet; and precisely, to a thermal transfer image-receiving sheet of high sensitivity with no image defects.

### BACKGROUND ART

Heretofore, various thermal transfer recording methods are known; and above all, a dye-diffusion thermal transfer recording system is specifically noted as a process capable of producing color hard copies of which the image quality is the nearest to that of the images of silver salt photographs (for example, see "New Development of Information Recording (hard copy) and its Material", issued by Toray Research Center, 1993, p. 241-285; and "Development of Printer Material", issued by CMC, 1995, p. 180). Moreover, as compared with silver salt photographs, the system is more advantageous in that it is a dry process, it enables direct image visualization from digital data and it facilitates formation of copies.

According to the dye-diffusion thermal transfer recording system, a dye-containing thermal transfer sheet (hereinafter this may be referred to as "ink sheet") and a thermal transfer image-receiving sheet (hereinafter this may be referred to as "image-receiving sheet") are put one upon another, then the ink sheet is heated by a thermal head from which the heat generation is controlled by an electric signal applied thereto, thereby transferring the dye in the ink sheet into the image-receiving sheet to attain recording of image information thereon. In the system, three colors of cyan, magenta and yellow may be transferred and recorded as overlaid, thereby giving a color image having a continuous color density gradation.

As the support for the image-receiving sheet in this system, plain paper may be used, and it may be produced at low costs. The image-receiving sheet having such a paper support generally has, for the purpose of compensating the cushionability of the support, a highly-cushionable layer, for example, a foam layer comprising a resin and a foaming agent, between the support and the receiving layer to thereby make the sheet cushionable, and the adhesiveness between the image-receiving sheet and the transfer sheet is thereby increased. However, a conventional image-receiving sheet described in JP-A 2-265789 and JP-A 8-224967 is fabricated by the use of an organic solvent-based resin coating liquid, and therefore in this, the coating liquid may crush the foams and the voids in the foam layer and, as a result, the desired cushionability could not be obtained, therefore causing pin holes or density unevenness in image formation, or as the case may be, the heat-insulating property of the foam layer is lowered with the result that the quantity of heat necessary for dye transfer may diffuse toward the back of the receiving sheet, thereby causing the reduction in the print density; and thus, the sheet has such various problems.

As opposed to this, a method of applying an aqueous dispersion emulsion onto a support makes it possible to make the delicate surface profile of the foam layer reflected on the surface of the image-receiving layer. For example, Japanese Patent 3410152 describes a receiving layer formed of an aqueous dispersion emulsion, referring to its advantages that the load to the global environment is small and the material itself is relatively inexpensive.

However, the recent tendency is toward more speedup of the printing speed in the art, therefore producing problems in that, when conventional ink sheets and image-receiving sheets are used for image printing with ordinary heat energy, then the formed images could not have a sufficient color density. Accordingly, some improved methods has been tried, comprising increasing the heat energy in printing, or comprising thinning the substrate sheet of ink sheets for increasing the heat transfer efficiency. The action for increasing the heat energy to be applied to the image-receiving sheet in printing requires the satisfaction of both the responsibility at low heat energy in the low-density area and the responsibility at high heat energy in the high-density area of the image-receiving sheet. In general, a thermoplastic polymer is used for the receiving polymer in the image-receiving sheet, and by controlling the glass transition temperature (Tg) thereof, both the dye transferability (in general, the transferability is higher when Tg is lower) and the ink sheet releasability (in general, the sheet is more hardly thermofused when Tg is higher) are made satisfactory. Accordingly, it is difficult to satisfy both the dye transferability and the ink sheet releasability within a broad temperature range.

Further, in a recent dye-diffusion thermal transfer recording system, the mainstream is a method of laminating the layer image with a protective layer for surface protection of the image and for increasing the image fastness, and in this, attention must be paid to the transferability of the protective layer to the thermal transfer image-receiving sheet. In general, the transfer temperature of the protective layer is set lower than the dye transfer temperature (at least than the temperature that attains the highest density) for preventing thermal diffusion of image, and in the image-receiving sheet having good releasability from ink sheet, the protective layer may be more difficult to transfer. From that viewpoint, Patent Japanese Patent 3410152 discloses an invention of improving the releasability of ink sheet, but this is not still on a satisfactory level; and this describes nothing relating to a method of satisfying both the releasability and the transferability of the protective layer.

JP-A-62156172 describes a coating agent suitable for ships, fishing nets etc. and comprising a polymer containing a polydimethylsiloxane group at the side chain and a copolymer of a vinyl polymerizable monomer.

EP-A-1 295 914 is directed to a clear paint composition comprising (a) a hydroxyl- and epoxy-containing acrylic resin, (b) a high acid value polyester resin having an acid value of 120 - 200 mgKOH/g and a number-average molecular weight of 500 - 4,000, (c) an alkoxysilyl-containing acrylic resin, and (d) an acrylic resin containing alkoxysilyl groups and dimethylpolysiloxane side chains, and forming a coating which, after being cured, has a glass transition point within a range of 100 - 120 °C.

WO-A-00/77102 describes a self-polishing marine antifouling paint composition comprising (i) at least one binder co-polymer comprising at least one side chain bearing at least one terminal siloxane group and (ii) fibers.

### SUMMARY OF THE INVENTION

The invention is to solve the above-mentioned problems and to provide a thermal transfer image-receiving sheet capable of giving, in rapid processing treatment, a good image having a high transfer density, and having few image defects and running failures to be caused by thermal fusion with ink by improving the releasability of ink sheet, and having no protective layer transfer unevenness; and to provide an image-forming method with it.

For solving the prior art problems, the present inventors have assiduously studied and, as a result, have found that, when a coating composition containing a specific polymer latex is used, then an image-receiving sheet with high transferability and good releasability can be formed. The invention is attained based on this finding.

The present inventors have assiduously studied and, as a result, have found that the above-mentioned objects can be attained by the following constitution:
(1) A thermal transfer image-receiving sheet, on a support, comprising at least one image-receiving layer comprising a polymer latex having a polysiloxane structure of the following formula [1] in the side chain: 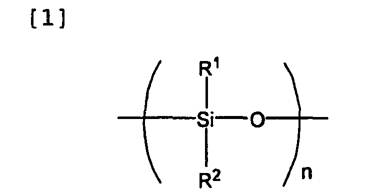 wherein R¹ and R² may be the same or different, each representing a hydrogen atom, an alkyl group or an aryl group; n indicates an integer of from 1 to 500, and wherein the sheet has a hollow particles containing heat-insulating layer between the support and the image-receiving layer.
(2) The thermal transfer image-receiving sheet according to the above (1), wherein the polymer latex has a repetitive unit derived from a monomer of the following formula [2]: 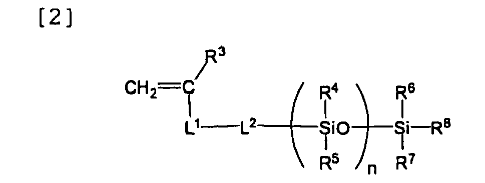 wherein R³ represents a hydrogen atom or a methyl group; L¹ represents a divalent linking group; L² represents a linking group having from 1 to 20 carbon atoms; R⁴ to R⁸ may be the same or different, each representing a hydrogen atom, an alkyl group or an aryl group; n indicates an integer of from 1 to 500.
(3) The thermal transfer image-receiving sheet according to the above (2), wherein the monomer of formula [2] is a monomer of the following formula [3]: 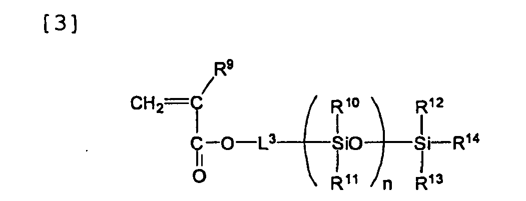 wherein R⁹ represents a hydrogen atom or a methyl group; L³ represents a linking group having from 1 to 20 carbon atoms; R¹⁰ to R¹⁴ may be the same or different, each representing a hydrogen atom, an alkyl group or an aryl group; n indicates an integer of from 1 to 500.
(4) The thermal transfer image-receiving sheet according to any one of the above (1) to (3), wherein the polymer latex is a copolymer and contains a repetitive unit of the following formula [4]: 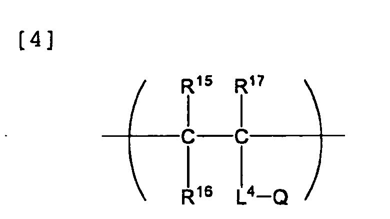 wherein R¹⁵, R¹⁶ and R¹⁷ each independently represent a hydrogen atom or a substituent; L³ represents a group selected from the following linking groups, or a divalent linking group formed by combining two or more of them; Q represents a carboxyl group (-COOH) or its salt, a sulfo group (-SO₃H) or its salt, or a phosphoryl group (-OPO₃H) or its salt,
   (linking groups)
   single bond, -O-, -CO-, -NR¹⁸-, -S-, -SO₂-, -P(=O)(OR¹⁹), alkylene group, arylene group,
   in these, R¹⁸ represents a hydrogen atom, an alkyl group, a cycloalkyl group, an aryl group, or an aralkyl group, and R¹⁹ represents an alkyl group, a cycloalkyl group, an aryl group, or an aralkyl group.
(5) The thermal transfer image-receiving sheet according to any one of (1) to (4), wherein the polymer latex is a copolymer prepared by copolymerizing a monomer mixture comprising a nitrile monomer, an aromatic vinyl monomer and a (meth)acrylic ester monomer as essential copolymerizable monomers.

According to the invention, there is provided a thermal transfer image-receiving sheet having good releasability and capable of giving an image with no image defects at high sensitivity; and using the coating composition described below, the thermal transfer image-receiving sheet having such characteristics can be produced with ease.

### DETAILED DESCRIPTION OF THE INVENTION

The thermal transfer image-receiving sheet of the invention and the coating composition for producing it are described in detail hereinunder.

The description of the constitutive elements of the invention given hereinunder is for some typical embodiments of the invention, to which, however, the invention should not be limited. In this description, the numerical range expressed by the wording "a number to another number" means the range that falls between the former number indicating the lowermost limit of the range and the latter number indicating the uppermost limit thereof.

### (Thermal Transfer Image-Receiving Sheet)

The thermal transfer image-receiving sheet of the invention has a receiving layer (dye-receiving layer) formed on a support. Preferably, an underlayer is formed between the receiving layer and the support, and for example, a white background-controlling layer, a static charge-controlling layer, an adhesive layer or a primer layer may be preferably formed. Preferably, a heat-insulating layer is formed between the underlayer and the support. In the invention, the layer between the support and the receiving layer may be referred to simply as "interlayer", and this includes the above underlayer and heat-insulating layer. The thermal transfer image-receiving sheet of the invention preferably contains at least one receiving layer and at least one interlayer. On the back of the support, preferably formed is a curl-controlling layer, a writing layer or a static charge-controlling layer.

### (Receiving Layer)

The receiving layer of thermal transfer image-receiving sheets of the invention contains a polymer latex having a polysiloxane structure represented by the formula [1] in the side chain..

### <Polymer Latex>

The polymer latex to be in the receiving layer is a dispersion of water-insoluble hydrophobic polymer particles dispersed in a water-soluble dispersion medium. The dispersion may be any one prepared by emulsifying a polymer in a dispersion medium, one prepared by emulsification and polymerization, one prepared by micelle dispersion, or a molecular dispersion of polymer molecules partially having a hydrophilic structure, in which the molecular chains themselves are molecularly dispersed. The polymer latex is described, for example, in Taira Okuda & Hiroshi Inagaki, "Synthetic Resin Emulsion", issued by the Polymer Publishing, 1978; Takaaki Sugimura, Yasuo Kataoka, Soichi Suzuki, & Keiji Kasahara, "Applications of Synthetic Latex", issued by the Polymer Publishing, 1993; Soichi Muroi, "Chemistry of Synthetic Latex", issued by the Polymer Publishing, 1970; Yoshiaki Miyosawa, "Development and Application of Water-Base Coating Material", by CMC, 2004; and JP-A 64-538. The mean particle size of the dispersion particles is preferably within a range of from 1 to 50000 nm, more preferably from 5 to 1000 nm. The particle size distribution of the dispersion particles is not specifically defined, and the particles may have a broad particle size distribution or may have a monodispersion particle size distribution.

The polymer latex may be an ordinary uniform-structured polymer latex, and in addition, it may also be a core/shell-structured polymer latex. In the latter case, it is often desirable that the core and the shell have a different glass transition temperature. The glass transition temperature of the polymer latex for use in the invention is preferably from -30°C to 100°C, more preferably from 0°C to 80°C, even more preferably from 10°C to 70°C, still more preferably from 15°C to 60°C.

As the preferred embodiments thereof, the polymer latex for use in the invention may be a linear polymer, or a branched polymer, or a crosslinked polymer; or may also be a homopolymer formed by polymerization of a single monomer or a copolymer formed by copolymerization of two or more different monomers. The copolymer may be a random copolymer or a block copolymer. Preferably, the number-average molecular weight of the polymer is from 5000 to 1000000, more preferably from 10000 to 500000. In case where a polymer having a too small molecular weight is used, the mechanical strength of the layer containing the polymer latex may be insufficient; but when a polymer having a too large molecular weight is used, then it is unfavorable since its film formability is poor. A crosslinked polymer is also preferably used in the invention.

### (Polysiloxane Structure of Formula [1])

The polymer latex having a polysiloxane structure of formula [1] in the side chain is described below.

In formula [1], R¹ and R² may be the same or different, each representing a hydrogen atom, an alkyl group or an aryl group. n is preferably an integer of from 1 to 500, more preferably an integer of from 5 to 200, most preferably an integer of from 10 to 150.

### (Monomer of the formula [2])

The polymer latex may be produced in any manner. Preferably, it is produced by polymerizing a monomer of the formula [2].

In formula [2], L¹ represents a divalent linking group.

The divalent linking group of L¹ may be any linking group.

Preferably L¹ is a single bond, -O-, -C(=O)-, -NR²⁰- (in which R²⁰ represents a hydrogen atom, an alkyl group, a cycloalkyl group, an aryl group, or an aralkyl group), -S-, -SO₂-, -p(=O)(OR²¹)- (in which R²¹ represents an alkyl group, a cycloalkyl group, an aryl group, or an aralkyl group), an alkylene group, an arylene group, or a divalent linking group formed by combining two or more of these; more preferably a group of -C(=O)-X- or a phenylene group optionally having a substituent; even more preferably a group of -C (=O) -X-. In this, X represents an oxygen atom, a sulfur atom or -N(R⁰)-, and R⁰ represents a hydrogen atom or a substituent (the substituent is preferably an alkyl group, a cycloalkyl group, an aryl group or a heterocyclic group).

L¹ is most preferably -C(=O)-O-.

In the invention, the substituents and those for the "group optionally having a substituent" in all the formulae including the formula [2] are described below.

In the invention, the substituents may be any ones, but are preferably selected from the substituent group mentioned below.

### (Substituent Group)

This includes an alkyl group (preferably an alkyl group having from 1 to 20 carbon atom, more preferably from 1 to 12 carbon atoms, even more preferably from 1 to 8 carbon atoms, including, for example, a methyl group, an ethyl group, an isopropyl group, a tert-butyl group, an n-octyl group, an n-decyl group, an n-hexadecyl group), a cycloalkyl group (preferably a cycloalkyl group having from 3 to 20 carbon atoms, more preferably from 5 to 12 carbon atoms, even more preferably from 5 to 8 carbon atoms, including, for example, a cyclopropyl group, a cyclopentyl group, a cyclohexyl group), an alkenyl group (preferably an alkenyl group having from 2 to 20 carbon atoms, more preferably from 2 to 12 carbon atoms, even more preferably from 2 to 8 carbon atoms, including, for example, a vinyl group, an allyl group, a 2-butenyl group, a 3-pentenyl group), a cycloalkenyl group (preferably a cycloalkenyl group having from 5 to 20 carbon atoms, more preferably from 5 to 12 carbon atoms, even more preferably from 5 to 8 carbon atoms, including, for example, a cyclopentenyl group, a cyclohexenyl group), an alkynyl group (preferably an alkynyl group having from 2 to 20 carbon atoms, more preferably from 2 to 12 carbon atoms, even more preferably from 2 to 8 carbon atoms, including, for example, a propargyl group, a 3-pentynyl group), an aryl group (preferably an aryl group having from 6 to 30 carbon atoms, more preferably from 6 to 20 carbon atoms, even more preferably from 6 to 12 carbon atoms, including, for example, a phenyl group, a p-methylphenyl group, a naphthyl group), a substituted or unsubstituted amino group (preferably an amino group having from 0 to 20 carbon atoms, more preferably from 0 to 10 carbon atoms, even more preferably from 0 to 6 carbon atoms, including, for example, an amino group, an alkylamino group, an arylamino group, a heterocyclic amino group, such as an unsubstituted amino group, a methylamino group, a dimethylamino group, a diethylamino group, an anilino group),
an alkoxy group (preferably an alkoxy group having from 1 to 20 carbon atoms, more preferably from 1 to 16 carbon atoms, even more preferably from 1 to 10 carbon atoms, including, for example, a methoxy group, an ethoxy group, a butoxy group), an alkoxycarbonyl group (preferably an alkoxycarbonyl group having from 2 to 20 carbon atoms, more preferably from 2 to 16 carbon atoms, even more preferably from 2 to 10 carbon atoms, including, for example, a methoxycarbonyl group, an ethoxycarbonyl group), an acyloxy group (preferably an acyloxy group having from 2 to 20 carbon atoms, more preferably from 2 to 16 carbon atoms, even more preferably from 2 to 10 carbon atoms, including, for example, an acetoxy group, a benzoyloxy group), an acylamino group (preferably an acylamino group having from 2 to 20 carbon atoms, more preferably from 2 to 16 carbon atoms, even more preferably from 2 to 10 carbon atoms, including, for example, an acetylamino group, a benzoylamino group), an alkoxycarbonylamino group (preferably an alkoxycarbonylamino group having from 2 to 20 carbon atoms, more preferably from 2 to 16 carbon atoms, even more preferably from 2 to 12 carbon atoms, including, for example, a methoxycarbonylamino group), an aryloxycarbonylamino group (preferably an aryloxycarbonylamino group having from 7 to 20 carbon atoms, more preferably from 7 to 16 carbon atoms, even more preferably from 7 to 12 carbon atoms, including, for example, a phenyloxycarbonylamino group), a sulfonylamino group (preferably a sulfonylamino group having from 1 to 20 carbon atoms, more preferably from 1 to 16 carbon atoms, even more preferably from 1 to 12 carbon atoms, including, for example, a methanesulfonylamino group, a benzenesulfonylamino group), a sulfamoyl group (preferably a sulfamoyl group having from 0 to 20 carbon atoms, more preferably from 0 to 16 carbon atoms, even more preferably from 0 to 12 carbon atoms, including, for example, a sulfamoyl group, a methylsulfamoyl group, a dimethylsulfamoyl group, a phenylsulfamoyl group), a carbamoyl group (preferably a carbamoyl group having from 1 to 20 carbon atoms, more preferably from 1 to 16 carbon atoms, even more preferably from 1 to 12 carbon atoms, including, for example, an unsubstituted carbamoyl group, a methylcarbamoyl group, a diethylcarbamoyl group, a phenylcarbamoyl group),
an alkylthio group (preferably an alkylthio group having from 1 to 20 carbon atoms, preferably from 1 to 16 carbon atoms, more preferably from 1 to 12 carbon atoms, including, for example, a methylthio group, an ethylthio group), an arylthio group (preferably an arylthio group having from 6 to 20 carbon atoms, more preferably from 6 to 16 carbon atoms, even more preferably from 6 to 12 carbon atoms, including, for example, a phenylthio group), a sulfonyl group (preferably a sulfonyl group having from 1 to 20 carbon atoms, more preferably from 1 to 16 carbon atoms, even more preferably from 1 to 12 carbon atoms, including, for example, a mesyl group, a tosyl group), a sulfinyl group (preferably a sulfinyl group having from 1 to 20 carbon atoms, more preferably from 1 to 16 carbon atoms, even more preferably from 1 to 12 carbon atoms, including, for example, a methanesulfinyl group, a benzenesulfinyl group), an ureido group (preferably an ureido group having from 1 to 20 carbon atoms, more preferably from 1 to 16 carbon atoms, even more preferably from 1 to 12 carbon atoms, including, for example, an unsubstituted ureido group, a methylureido group, a phenylureido group), a phosphoramide group (preferably a phosphoramide group having from 1 to 20 carbon atoms, more preferably from 1 to 16 carbon atoms, even more preferably from 1 to 12 carbon atoms, including, for example, a diethylphosphoramide group, a phenylphosphoramide group), a hydroxyl group, a mercapto group, a halogen atom (e.g., a fluorine atom, a chlorine atom, a bromine atom, an iodine atom), a cyano group, a sulfo group, a carboxyl group, a nitro group, a hydroxamic acid group, a sulfino group, a hydrazino group, an imino group, a heterocyclic group (preferably a heterocyclic group having from 1 to 30 carbon atoms more preferably from 1 to 12 carbon atoms, and having a hetero atom such as a nitrogen atom, an oxygen atom or a sulfur atom, including, for example, an imidazolyl group, a pyridyl group, a quinolyl group, a furyl group, a piperidyl group, a morpholino group, a benzoxazolyl group, a benzimidazolyl group, a benzothiazolyl group), a silyl group (preferably a silyl group having from 3 to 40 carbon atoms, more preferably from 3 to 30 carbon atoms, even more preferably from 3 to 24 carbon atoms, including, for example, a trimethylsilyl group, a triphenylsilyl group).

These substituents may be further substituted with any of these substituents. In case where one substituent has two or more substituents, they may be the same or different. If possible, they may bond to each other to form a ring.

L² represents a linking group having from 1 to 20 carbon atoms, preferably a linear alkyl group having from 1 to 5 carbon atoms.

R³ represents a hydrogen atom or a methyl group.

R⁴ to R⁷ may be the same or different, each representing a hydrogen atom, an alkyl group or an aryl group.

n is preferably an integer of from 1 to 500, more preferably an integer of from 5 to 200, most preferably an integer of from 10 to 150.

### (Monomer of the Formula [3])

More preferably, the monomer of formula [2] is a monomer of the formula [3].

In formula [3], R⁹ represents a hydrogen atom or a methyl group; L³ represents a linking group having from 1 to 20 carbon atoms; R¹⁰ to R¹⁴ may be the same or different, each representing a hydrogen atom, an alkyl group or an aryl group. n indicates an integer of from 1 to 500.

In formula [3], R⁹, L³, R¹⁰ to R¹⁴ have the same meanings as those of the corresponding R³, L², R⁴ to R⁸, respectively, in formula [2], and their preferred ranges are also the same as those of the latter.

Preferably, the polysiloxane structure is introduced into the copolymer in the invention, within a range of from 0.01 to 30% by mass, more preferably from 0.05 to 20% by mass, even more preferably from 0.1 to 10% by mass.

Specific examples of the monomers of any of the formulae [2] and [3] for use in the invention are shown below, by which, however, the invention should not be restricted.

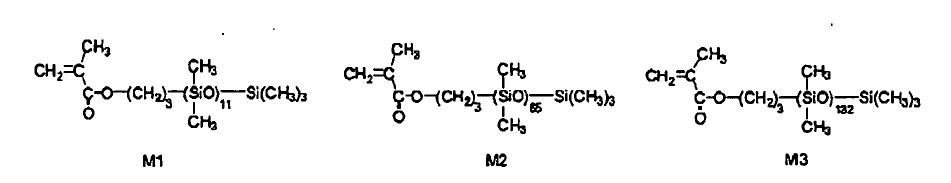

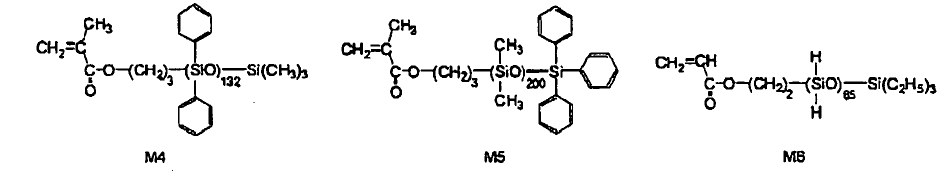

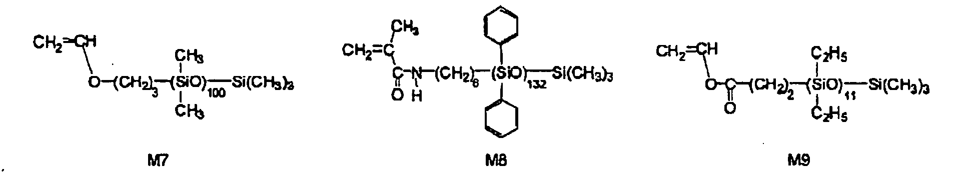

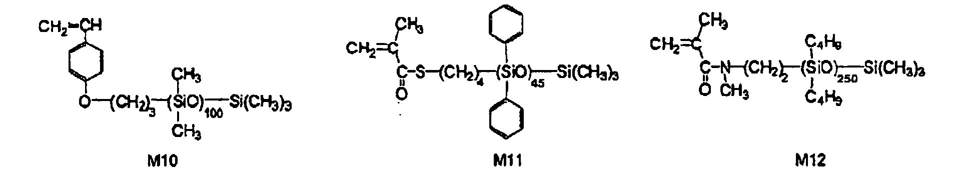

The monomers of any one of the formula [2] or [3] may be produced according to the method for Chisso's Silaplain series or that for Shin-etsu Silicone's XE series.

### (Other Monomers of the Polymer Latex)

The polymer latex for use in the receiving layer of the thermal transfer image-receiving sheets of the invention may be a homopolymer or a copolymer of the above monomer, but is preferably a copolymer. In case where it is a copolymer, it may be a copolymer of the above monomers or may be a copolymer of the above monomer and any other monomer.

For obtaining the copolymer, the other monomer than the monomer of any one of the above formula [2] or [3] is not specifically defined, and may be any one capable of polymerizing in an ordinary radical polymerization or ionic polymerization method. For example, preferred are those of the following monomer groups (a) to (i). From these monomers, any ones may be suitably selected and combined and used in producing the polymer latex for use herein.

### - Monomer Groups (a) to (i)-

(a) Conjugated dienes: 1,3-butadiene, isoprene, 1-phenyl-1,3-butadiene, 1-α-naphthyl-1,3-butadiene, 1-β-naphthyl-1,3-butadiene, cyclopentadiene, etc.
(b) Olefins: ethylene, propylene, vinyl chloride, vinylidene chloride, 6-hydroxy-1-hexene, 4-pentenoic acid, methyl 8-nonenoate, vinylsulfonic acid, trimethylvinylsilane, trimethoxyvinylsilane, 1,4-divinylcyclohexane, 1,2,5-trivinylcyclohexane, etc.
(c) α,β-unsaturated carboxylates: alkyl acrylates (e.g., methyl acrylate, ethyl acrylate, butyl acrylate, cyclohexyl acrylate, 2-ethylhexyl acrylate, dodecyl acrylate), substituted alkyl acrylates (e.g., benzyl acrylate, 2-cyanoethyl acrylate), alkyl methacrylates (e.g., methyl methacrylate, butyl methacrylate, 2-ethylhexyl methacrylate, dodecyl methacrylate), substituted alkyl methacrylates (e.g., 2-hydroxyethyl methacrylate, glycidyl methacrylate, glycerin monomethacrylate, 2-acetoxyethyl methacrylate, tetrahydrofurfuryl methacrylate, 2-methoxyethyl methacrylate, polypropylene glycol monomethacrylate (molar number of added polyoxypropylene = 2 to 100), 3-N,N-dimethylaminopropyl methacrylate, 2-carboxyethyl methacrylate, 3-sulfopropyl methacrylate, 4-oxysulfobutyl methacrylate, 3-trimethoxysilylpropyl methacrylate, allyl methacrylate, 2-isocyanatoethyl methacrylate), unsaturated dicarboxylic acid derivatives (e.g., monobutyl maleate, dimethyl maleate, monomethyl itaconate, dibutyl itaconate), polyfunctional esters (e.g., ethylene glycol diacrylate, ethylene glycol dimethacrylate, 1,4-cyclohexane diacrylate, pentaerythritol tetramethacrylate, pentaerythritol triacrylate, trimethylolpropane triacrylate, trimethylolethane triacrylate, dipentaerythritol pentamethacrylate, pentaerythritol hexaacrylate, 1,2,4-cyclohexane tetraacrylate), etc.
(d) α,β-unsaturated carboxylic acid amides: for example, acrylamide, methacrylamide, N-methylmethacrylamide, N,N-dimethylacrylamide, N-methyl-N-hydroxyethylmethacrylamide, N-tert-butylacrylamide, N-tert-octylmethacrylamide, N-cyclohexylacrylamide, N-phenylacrylamide, N-(2-acetacetoxyethyl)acrylamide, N-acryloylmorpholine, diacetonacrylamide, itaconic acid diamide, N-methylmaleimide, 2-acrylamide-methylpropanesulfonic acid, methylenebisacrylamide, dimethacryloylpiperazine, etc.
(e) Unsaturated nitriles: acrylonitrile, methacrylonitrile, etc.
(f) Styrene and its derivatives: styrene, vinyltoluene, p-tert-butylstyrene, vinylbenzoic acid, methyl vinylbenzoate, α-methylstyrene, vinylnaphthalene, p-hydroxymethylstyrene, sodium p-styrenesulfonate, potassium p-styrenesulfinate, p-aminomethylstyrene, 1,4-divinylbenzene, etc.
(g) Vinyl ethers: methyl vinyl ether, butyl vinyl ether, methoxyethyl vinyl ether, etc.
(h) Vinyl esters: vinyl acetate, vinyl propionate, vinyl benzoate, etc.
(i) Other polymerizing monomers: N-vinylimidazole, 4-vinylpyridine, N-vinylpyrrolidone, 2-vinyloxazoline, 2-isopropenyloxazoline, divinylsulfone, etc.

Of those, especially preferred are monomers capable of giving repetitive units of the formula [4] in the view point of acting as a hydrogen-bonding group.

### (Repetitive Unit of Formula [4])

The repetitive unit of formula [4] is described below.

L⁴ represents a group selected from the following linking groups, or a divalent linking group formed by combining two or more of them.
linking groups for use as the L⁴ is single bond, -O-, -CO-, -NR¹⁸- (in which R¹⁸ represents a hydrogen atom, an alkyl group, a cycloalkyl group, an aryl group, or an aralkyl group), -S-, -SO₂-, -P(=O)(OR¹⁹)- (in which R¹⁹ represents an alkyl group, a cycloalkyl group, an aryl group or an aralkyl group), alkylene group, arylene group.
L⁴ preferably includes a single bond, -O-, -CO-, -NR¹⁸-, -S-, -SO₂-, an alkylene group or an arylene group, and more preferably includes -O-, -CO-, -NR¹⁸-, an alkylene group or an arylene group.

In case where L⁴ includes an alkylene group, the number of the carbon atoms of the alkylene group is preferably from 1 to 10, more preferably from 1 to 8, even more preferably from 1 to 6. Especially preferred examples of the alkylene group include methylene, ethylene, trimethylene, tetrabutylene, hexamethylene.

In case where L⁴ includes an arylene group, the number of the carbon atoms of the arylene group is preferably from 6 to 24, more preferably from 6 to 18, even more preferably from 6 to 12. Especially preferred examples of the arylene group include phenylene, naphthylene. More preferred is a phenylene optionally having a substituent.

In case where L⁴ includes a divalent linking group formed by combining an alkylene group and an arylene group, or that is, where it includes an aralkylene group, the number of the carbon atoms of the aralkylene group is preferably from 7 to 34, more preferably from 7 to 26, even more preferably from 7 to 16. Especially preferred examples of the aralkylene group include phenylene-methylene, phenylene-ethylene, methylene-phenylene.

The group of L⁴ may have a suitable substituent. The substituent may be those of the substituent groups described in the fomula [2].

Examples of the concrete structure of L⁴ are shown blow, to which, however, the invention should not be limited.

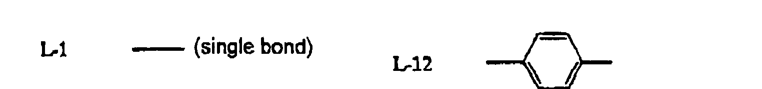

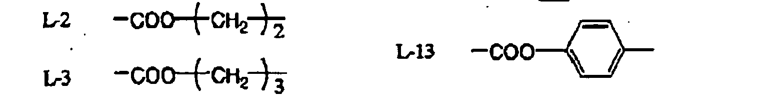

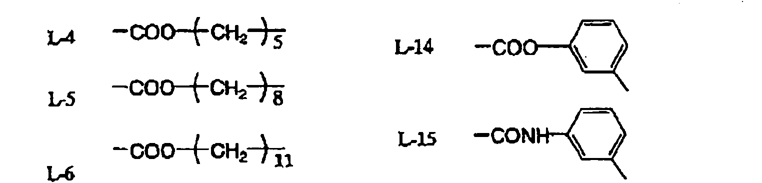

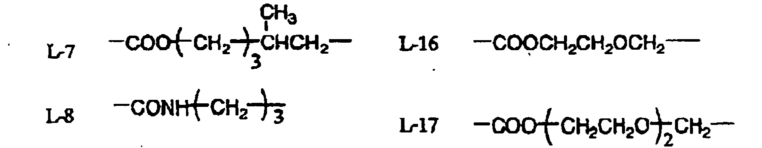

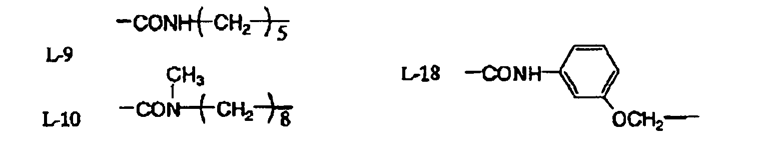

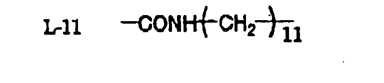

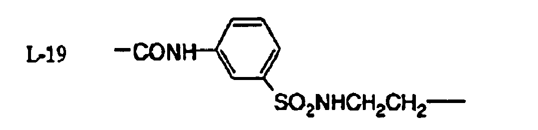

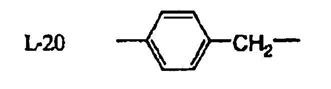

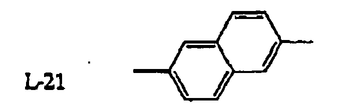

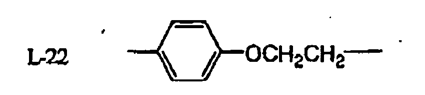

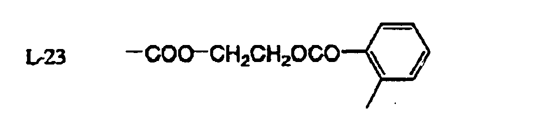

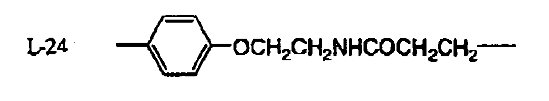

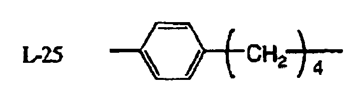

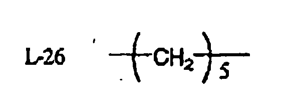

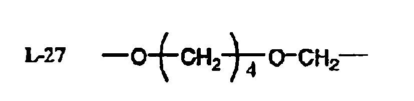

Q represents a carboxyl group (-COOH) or its salt, a sulfo group (-SO₃H) or its salt, or a phosphoryl group (-OPO₃H) or its salt.

The salt of Q includes, for example, lithium salts, sodium salts, ammonium salts (e.g., ammonium, tetramethylammonium, trimethyl-2-hydroxyethylammonium, tetrabutylammonium, trimethylbenzylammonium, dimethylphenylammonium), pyridinium salts.

Q is preferably a carboxyl group, a sulfo group or a phospho group, more preferably a carboxyl group or a sulfo group.

R¹⁵, R¹⁶ and R¹⁷ each independently represent a hydrogen atom or a substituent. The substituents of R¹⁵, R¹⁶ and R¹⁷ may be those of the above-mentioned substituent groups.

R¹⁵, R¹⁶ and R¹⁷ are preferably a hydrogen atom, an alkyl group, a cycloalkyl group, a halogen atom (e.g., fluorine atom, chlorine atom, bromine atom, iodine atom), or a group of the above-mentioned -L⁴-Q; more preferably a hydrogen atom, an alkyl group having from 1 to 6 carbon atoms, a chlorine atom or a group of -L⁴-Q; even more preferably a hydrogen atom, or an alkyl group having from 1 to 4 carbon atoms; most preferably a hydrogen atom, or an alkyl group having 1 or 2 carbon atoms.

Specific examples of the alkyl group include methyl, ethyl, n-propyl, n-butyl, sec-butyl. The alkyl group may have a suitable substituent. The substituent includes a halogen atom, an aryl group, a heterocyclic group, an alkoxy group, an aryloxy group, an alkylthio group, an arylthio group, an acyl group, a hydroxyl group, an acyloxy group, an amino group, an alkoxycarbonyl group, an acylamino group, an oxycarbonyl group, a carbamoyl group, a sulfonyl group, a sulfamoyl group, a sulfonamide group, a sulforyl group, a carboxyl group.

The number of the carbon atoms of the alkyl group does not contain the number of the carbon atoms of the substituent. The same shall apply to the number of the carbon atoms of the other groups.

The repetitive units of the formula [4] in the polymer may be one type, or may contain two or more types co-existed.

The polymer latex for use in the invention even more preferably a tetra-block or more copolymer at least contains the α,β-unsaturated carboxylates (c), the unsaturated nitriles (e), the styrene and its derivatives (f). In the other view point, the polymer latex for use in the invention preferably a copolymer which a monomer mixture of an aryl vinyl monomer, a nitrile monomer and a (meth)acrylate ester monomer are copolymerized. The (meth)acrylate ester include an acrylate ester, a methacrylate ester and a misture of each ester.

Those copolymers are preferable in the point of increasing a dispersity of the dye at image transfer by decreasing a crystallinity of the polymer latex.

Examples of concrete structures of the polymer latex for use in the invention are shown below, which, however, are not limitative. The numerals in the formulae indicate the ratio by mass of the individual monomer component. Mw means a weight-average molecular weight. The following examples may be random copolymers or block copolymers, and should not be limited to block copolymers according to the expressions given below. The following examples may be prepared according to the description in the above-mentioned references, or are available as commercial products.

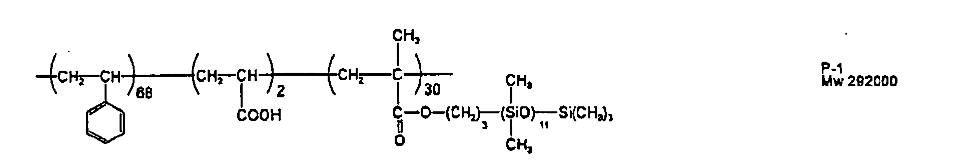

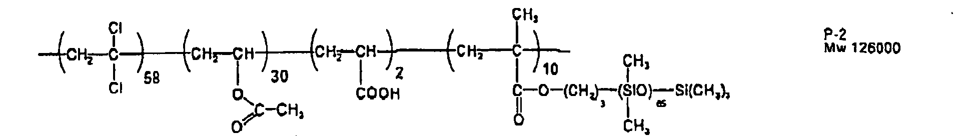

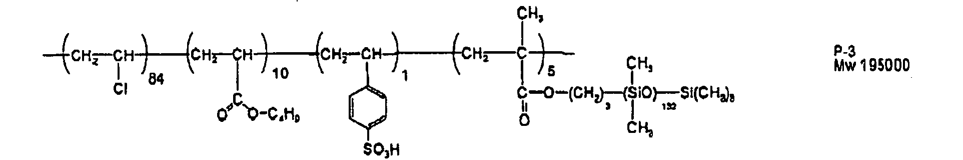

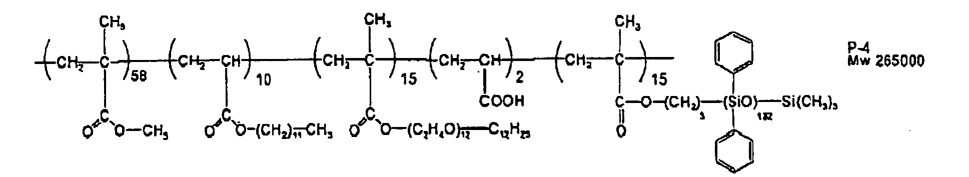

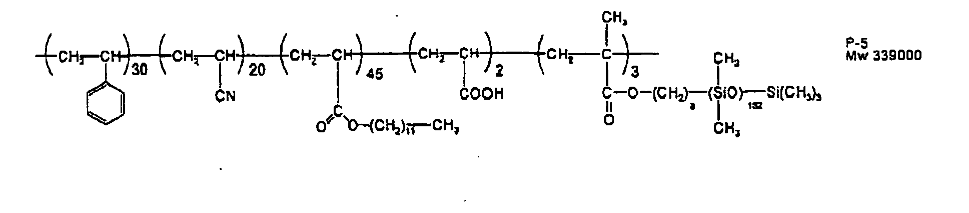

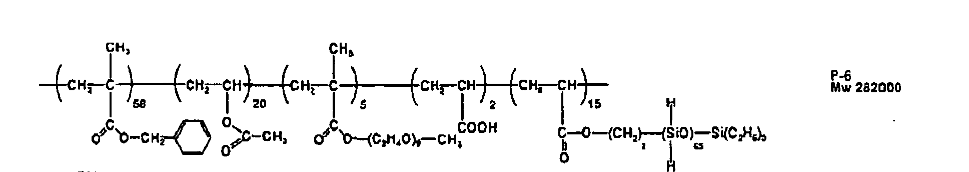

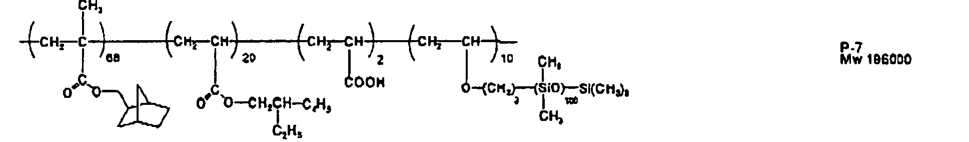

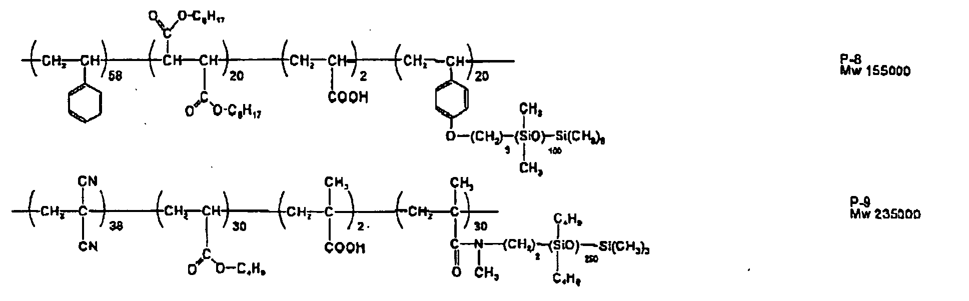

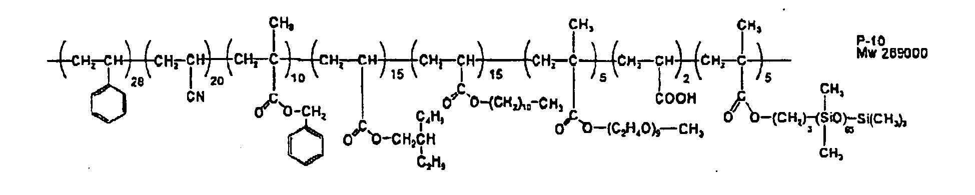

One or more different types of the polymer latex may be used herein either singly or as combined and blended.

The polymer latex that may be blended in the invention is commercially available, and for example, acrylic polymers, polyesters, polyurethanes, rubbers, polyvinyl chlorides, polyvinyl acetates are usable.

Examples of the acrylic polymers are Daicel Chemical Industry's Sevian A-4635, 4718, 4601; Nippon Zeon's Nipol Lx811, 814, 821, 820, 855, 857x2; Dainippon Ink Chemical's Voncoat R3370, 4280; Nippon Pure Chemicals' Jurymer ET-410: JSR's AE116, AE119, AE121, AE125, AE134, AE137, AE140, AE173; Toa Gosei's Aron A-104; Takamatsu Yushi's NS-600X, NS-620X; Nisshin Chemical Industry's Vinyblan 2580, 2583, 2641, 2770, 2770H, 2635, 2886, 5202C, 2706 (all trade names).

Examples of the polyesters are Dai-Nippon Ink Chemical's FINETEX ES650, 611, 675, 850, Eastman Chemical's WD-size, WMS, Takamatsu Yushi's A-110, A-115GE, A-120, A-121, A-124GP, A-124S, A-160P, A-210, A-215GE, A-510, A-513E, A-515GE, A-520, A-610, A-613, A-615GE, A-620, WAC-10, WAC-15, WAC-17XC, WAC-20, S-110, S-110EA, S-111SL, S-120, S-140, S-140A, S-250, S-252G, S-250S, S-320, S-680, DNS-63P, NS-122L, NS-122LX, NS-244LX, NS-140L, NS-141LX, NS-282LX, Toa Gosei's Aron Melt PES-1000 Series, PES-2000 Series, Toyobo's Vylonal MD-1100, MD-1200, MD-1220, MD-1245, MD-1250, MD-1335, MD-1400, MD-1480, MD-1500, MD-1930, MD-1985, Sumitomo Seika's Ceporjon ES (all trade names).

Examples of the polyurethanes are Dai-Nippon Ink Chemical's HYDRAN AP10, AP20, AP30, AP40, 101H, Vondic 1320NS, 1610NS, Dainichi Seika's D-1000, D-2000, D-6000, D-4000, D-9000, Takamatsu Yushi's NS-155X, NS-310A, NS-310X, NS-311X, Dai-ichi Kogyo Pharmaceutical's Elastron (all trade names).

Examples of the rubbers are LACSTAR 7310K, 3307B, 4700H, 7132C (all by Dai-Nippon Ink Chemical), Nipol Lx416, LX410, LX430, LX435, LX110, LX415A, LX438C, 2507H, LX303A, LX407BP Series, V1004, MH5055 (all by Nippon Zeon) (all trade names).

Examples of the polyvinyl chlorides are Nippon Zeon's G351, G576, Nisshin Chemical Industry's Vinybran 240, 270, 277, 375, 386, 609, 550, 601, 602, 630, 660, 671, 683, 680, 680S, 681N, 685R, 277, 380, 381, 410, 430, 432, 860, 863, 865, 867, 900, 900GT, 938, 950 (all trade names). Examples of polyvinylidene chlorides are Asahi Kasei's L502, L513, Dai-Nippon Ink Chemical's D-5071 (all trade names). Examples of polyolefins are Mitsui Petrochemical's Chemipearl S120, SA100, V300 (P-40: Tg 80°C), Dai-Nippon Ink Chemical's Voncoat 2830, 2210, 2960, Sumitomo Seika's Zaikthene, Ceporjon G; and examples of copolymer nylons are Sumitomo Seika's Ceporjon PA (all trade names).

Examples of the polyvinyl acetates are Nisshin Chemical Industry's Vinybran 1080, 1082, 1085W, 1108W, 1108S, 1563M, 1566, 1570, 1588C, A22J7-F2, 1128C, 1137, 1138, A20J2, A23J1, A23K1, A23P2E, A68J1N, 1086A, 1086, 1086D, 1108S, 1187, 1241LT, 1580N, 1083, 1571, 1572, 1581, 4465, 4466, 4468W, 4468S, 4470, 4485LL, 4495LL, 1023, 1042, 1060, 1060S, 1080M, 1084W, 1084S, 1096, 1570K, 1050, 1050S, 3290, 1017AD, 1002, 1006, 1008, 1107L, 1225, 1245L, GV-6170, GV-6181, 4468W, 4468S (all trade names).

The lowermost film-forming temperature (melt flow temperature, MFT) of the polymer latex is preferably from -30°C to 90°C, more preferably from 0°C to 70°C or so. For controlling the lowermost film-forming temperature, a filming promoter may be added to the polymer latex when fabricate the receiving layer for use in the invention. The filming promoter may be referred to as a temporary plasticizer, and this is an organic compound (in general, an organic solvent) that lowers the lowermost film-forming temperature of the polymer latex, and is described, for example, in Soichi Muroi, "Chemistry of Synthetic Latex", issued by the Polymer Publishing, 1970. The compounds mentioned below are preferred for the filming promoter; however, the compounds usable in the invention should not be limited to these examples.
Z-1: benzyl alcohol
Z-2: 2,2,4-trimethylpentanediol 1,3-monoisobutyrate
Z-3: 2-dimethylaminoethanol
Z-4: diethylene glycol

The polymer latex for use in the invention may contain any other polymer along with the polymer latex. The polymer that may be combined with it is preferably transparent or semitransparent and colorless, including natural resins, polymers and copolymers, and synthetic resins, polymers and copolymers, and other film-forming media, for example, gelatins, polyvinyl alcohols, hydroxyethyl celluloses, cellulose acetates, cellulose acetate butyrates, polyvinylpyrrolidones, casein, starch, polyacrylic acids, polymethyl methacrylates, polyvinyl chlorides, polymethacrylic acids, styrene-maleic anhydride copolymers, styrene-acrylonitrile copolymers, styrene-butadiene copolymers, polyvinyl acetals (e.g., polyvinyl formal, polyvinyl butyral), polyesters, polyurethanes, phenoxy resins, polyvinylidene chlorides, polyepoxides, polycarbonates, polyvinyl acetates, polyolefins, polyamides. A binder may be formed from water or from an organic solvent or an emulsion by coating.

### (Binder)

The binder is a medium for forming the film with the polymer latex used in the invention.

The binder for use in the invention preferably has a glass transition temperature (Tg) falling within a range of from -30°C to 70°C from the working brittleness and the image storability, more preferably from -10°C to 50°C, even more preferably from 0°C to 40°C. Two or more polymers may be blended for the binder. In this case, it is desirable that the weighted mean Tg of the polymer blend formed in consideration of the composition thereof falls within the above range. In case where the blend has phase separation or a core/shell structure, it is also desirable that the weighted mean Tg thereof falls within the above range.

The glass transition temperature (Tg) may be computed according to the following formula:

1/Tg=Σ(Xi/Tgi)

In this, the polymer is formed through copolymerization of n's monomers from i = 1 to n. Xi means the mass fraction of the i'th monomer (ΣXi = 1); and Tgi means the glass transition temperature (absolute temperature) of a homopolymer of the i' th monomer. E is the sum of i = 1 to n. For the glass transition temperature of the homopolymer of each monomer (Tgi), employed are the data in "Polymer Handbook (3rd Edition) " (by J. Brandrup, E. H. Immergut, Wiley-Interscience, 1989).

The polymer to be used for the binder for use in the invention may be readily obtained through solution polymerization, suspension polymerization, emulsion polymerization, dispersion polymerization, anionic polymerization, cationic polymerization, etc. Most preferred is emulsion polymerization capable of giving the polymer as a latex. Also preferred is a method of preparing a polymer in a solution, then adding water thereto after neutralization or after adding an emulsifier thereto, and forcedly stirring it to prepare an aqueous dispersion. The emulsion polymerization method may be attained, for example, as follows: Water, or a mixed solvent of water and a water-miscible organic solvent (e.g., methanol, ethanol, acetone) is used as a dispersion medium, and a monomer mixture in an amount of from 5 to 150% by mass relative to the dispersion medium, and a polymerization emulsifier in an amount of from 0.1 to 10% by mass and a polymerization initiator in an amount of from 0.001 to 5% by mass relative to the total monomer amount are used, and the system is polymerized with stirring at 30 to 100°C or so, preferably at 60 to 90°C for 3 to 24 hours. The conditions of the dispersion medium, the monomer concentration, the amount of polymerization initiator, the amount of polymerization emulsifier, the amount of dispersant, the reaction temperature and the mode of monomer addition may be suitably determined in consideration of the type of the monomer to be used. If desired, a dispersant is preferably used.

The emulsion polymerization method may be generally attained according to the following literature. Taira Okuda & Hiroshi Inagaki, "Synthetic Resin Emulsion", issued by the Polymer Publishing, 1978; Takaaki Sugimura, Yasuo Kataoka, Soichi Suzuki, & Keiji Kasahara, "Applications of Synthetic Latex", issued by the Polymer Publishing, 1993; Soichi Muroi, "Chemistry of Synthetic Latex", issued by the Polymer Publishing, 1970. For the emulsion polymerization method for producing the polymer latex for use in the invention, any of a batch polymerization method, a monomer (continuous, intermittent) addition method, an emulsion addition method, a seed polymerization method may be selected. From the viewpoint of latex producibility, preferred are a batch polymerization method, a monomer (continuous, intermittent) addition method, an emulsion addition method.

The polymerization initiator may be any one having a radical-generating capability. For it, for example, usable are inorganic peroxides such as persulfates, hydrogen peroxide; peroxides described in Nippon Yushi's "Catalog of Organic Peroxides"; and azo compounds described in Wako Pure Chemical Industry's "Catalog of Azo Polymerization Initiators". Of those, preferred are water-soluble peroxides such as persulfates, and water-soluble azo compounds described in Wako Pure Chemical Industry's "Catalog of Azo Polymerization Initiators"; more preferred are ammonium persulfate, sodium persulfate, potassium persulfate, azobis(2-methylpropionamidine) hydrochloride, azobis(2-methyl-N-(2-hydroxyethyl)propionamide), azobiscyanovaleric acid; and even more preferred are peroxides such as ammonium persulfate, sodium persulfate, potassium persulfate, from the viewpoint of the image storability, the solubility and the cost.

The amount of the polymerization initiator to be added is preferably from 0.3% by mass to 2.0% by mass relative to the total monomer amount, more preferably from 0.4% by mass to 1.75% by mass, even more preferably from 0.5% by mass to 1.5% by mass.

For the polymerization emulsifier, employable is any of anionic surfactants, nonionic surfactants, cationic surfactants, ampholytic surfactants. Preferred are anionic surfactants from the viewpoint of the dispersibility and the image storability. More preferred is a sulfonic acid-type anionic surfactant, as it ensures polymerization stability even though its amount is small, and as it has hydrolysis resistance. Even more preferred is a long-chain alkyldiphenyl ether disulfonate such as typically Pelex SS-H (trade name by Kao) ; and still more preferred is a low-electrolyte type surfactant such as Pionine A-43-S (trade name by Takemoto Yushi).

Preferably, as the polymerization emulsifier, a sulfonic acid-type anionic surfactant is used in an amount of from 0.1% by mass to 10.0% by mass relative to the total monomer amount, more preferably from 0.2% by mass to 7.5% by mass, even more preferably from 0.3% by mass to 5.0% by mass.

For producing the polymer latex for use in the invention, preferably used is a chelating agent. The chelating agent is a compound capable of coordinating (chelating) a polyvalent ion, for example a metal ion such as iron ion or an alkaline earth metal ion such as calcium ion; and for it, usable are the compounds described in the published official gazettes or the specifications of JP-B 6-8956, USP 5053322, JP-A 4-73645, 4-127145, 4-247073, 4-305572, 6-11805, 5-173312, 5-66527, 5-158195, 6-118580, 6-110168, 6-161054, 6-175299, 6-214352, 7-114161, 7-114154, 7-120894, 7-199433, 7-306504, 9-43792, 8-314090, 10-182571, 10-182570, 11-190892.

For the chelating agent, preferred are inorganic chelating compounds (e.g., sodium tripolyphosphate, sodium hexametaphosphate, sodium tetrapolyphosphate), aminopolycarboxylic acid-type chelating compounds (e.g., nitrilotriacetic acid, ethylenediaminetetraacetic acid), organic phosphonic acid-type chelating agents (as in Research Disclosure No. 18170, JP-A 52-102726, 53-42730, 56-97347, 54-121127, 55-4024, 55-4025, 55-29883, 55-126241, 55-65955, 55-65956, 57-179843, 54-61125, German Patent 1045373), polyphenol-type chelating agents, polyamine-type chelating compounds; and more preferred are aminopolycarboxylic acid derivatives.

Preferred examples of the aminopolycarboxylic acid derivatives are the compounds given in the attached table of "EDTA(-Chemistry of Complexanes-) (by Nanko-do, 1977) ; and the carboxyl group in these compounds may be partly substituted with an alkali metal salt such as sodium or potassium or an ammonium salt. Especially preferred aminocarboxylic acid derivatives are iminodiacetic acid, N-methyliminodiacetic acid; N-(2-aminoethyl)iminodiacetic acid, N-(carbamoylmethyl)iminodiacetic acid, nitrilotriacetic acid, ethylenediamine-N,N'-diacetic acid, ethylenediamine-N,N'-di-α-propionic acid, ethylenediamine-N,N'-di-β-propionic acid, N,N'-ethylene-bis(α-o-hydroxyphenyl)glycine, N,N'-di(2-hydroxybenzyl)ethylenediamine-N,N'-diacetic acid, ethylenediamine-N,N'-diacetic acid-N,N'-diacetohydroxamic acid, N-hydroxyethylethylenediamine-N,N',N'-triacetic acid, ethylenediamine-N,N,N',N'-tetraacetic acid, 1,2-propylenediamine-N,N,N',N'-tetraacetic acid, d,1-2,3-diaminobutane-N,N,N',N'-tetraacetic acid, meso-2,3-diaminobutane-N,N,N',N'-tetraacetic acid, 1-phenylethylenediamine-N,N,N',N'-tetraacetic acid, d,1-1,2-diphenylethylenediamine-N,N,N',N'-tetraacetic acid, 1,4-diaminobutane-N,N,N',N'-tetraacetic acid, trans-cyclobutane-1,2-diamine-N,N,N',N'-tetraacetic acid, trans-cyclopentane-1,2-diamine-N,N,N',N'-tetraacetic acid, trans-cyclohexane-1,2-diamine-N,N,N',N'-tetraacetic acid, cis-cyclohexane-1,2-diamine-N,N,N'-N'-tetraacetic acid, cyclohexane-1,3-diamine-N,N,N',N'-tetraacetic acid, cyclohexane-1,4-diamine-N,N,N',N'-tetraacetic acid, o-phenylenediamine-N,N,N',N'-tetraacetic acid, cis-1,4-diaminobutene-N,N,N',N'-tetraacetic acid, trans-1,4-diaminobutene-N,N,N',N'-tetraacetic acid, α,α'-diamino-o-xylene--N,N,N',N'-tetraacetic acid, 2-hydroxy-1,3-propanediamine-N,N,N',N'-tetraacetic acid, 2,2'-oxy-bis(ethyliminodiacetic acid), 2,2'-ethylenedioxy-bis(ethyliminodiacetic acid), ethylenediamine-N,N'-diacetic acid-N,N'-di-α-propionic acid, ethylenediamine-N,N'-diacetic acid-N,N'-di-β-propionic acid, ethylenediamine-N,N,N',N'-tetrapropionic acid, diethylenetriamine-N,N,N',N",N"-pentaacetic acid, triethylenetetramine-N,N,N',N",N"',N"'-hexaacetic acid, 1,2,3-triaminopropane-N,N,N',N",N"',N"'-hexaacetic acid; and the carboxyl group in these compounds may be partly substituted with an alkali metal salt such as sodium or potassium or an ammonium salt.

The amount of the chelating agent to be added is preferably from 0.01% by mass to 0.4% by mass relative to the total monomer amount, preferably from 0.02% by mass to 0.3% by mass, more preferably from 0.03% by mass to 0.15% by mass. When the amount of the chelating agent is less than 0.01% by mass, then the trapping of the metal ion with which the polymer latex may be contaminated in its production process would be insufficient, and the latex stability against coagulation may lower, and the coatability of the composition may be worsened. When the amount is more than 0.4% by mass, then the latex viscosity may increase to worsen the coatability.

In producing the polymer latex for use in the invention, preferably used is a chain transfer agent. The chain transfer agent is preferably those described in "Polymer Handbook, 3rd Ed. " (by Wiley-Interscience, 1989) . Sulfur compounds are more preferred as having a high chain transfer capability, and the amount thereof to be used may be small. Especially preferred is a hydrophobic mercaptan-type chain transfer agent such as tert-dodecylmercaptan, n-dodecylmercaptan.

The amount of the chain transfer agent to be used is preferably from 0.2% by mass to 2.0% by mass, more preferably from 0.3% by mass to 1.8% by mass, even more preferably from 0.4% by mass to 1.6% by mass.

In the emulsion polymerization, further usable are various additives as described in Synthetic Rubber Handbook, for example, electrolyte, stabilizer, thickener, defoaming agent, antioxidant, vulcanizing agent, freezing inhibitor, gelling agent, vulcanization promoter and others, in addition to the above-mentioned compounds.

As the solvent for the coating liquid of the polymer latex for use in the invention, a water-base solvent may be used, and it may be combined with a water-miscible organic solvent. The water-miscible organic solvent includes, for example, alcohol solvents such as methyl alcohol, ethyl alcohol, propyl alcohol; cellosolve solvents such as methyl cellosolve, ethyl cellosolve, butyl cellosolve; and ethyl acetate, dimethylformamide, etc. The amount of the organic solvent to be added is preferably at most 50% by mass of the solvent, more preferably at most 30% by mass.

Preferably, the polymer latex for use in the invention has a polymer concentration of from 10 to 70% by mass relative to the latex liquid, more preferably from 20 to 60% by mass, even more preferably from 30 to 55% by mass.

The polymer latex in the image-receiving sheet of the invention includes a gel or dry film state that is formed by drying a part of the solvent after coating.

### (Coating Composition)

The coating composition useful in the invention is described below.

### (Receiving Layer)

The coating composition is especially preferably used as a receiving layer. The receiving layer sticking to the ink sheet is heated and plays a role of receiving the dye given thereto from an ink sheet and keeping the formed image. For this, a dye-fixable (fixable receiving polymer) and high releasability from the ink sheet after thermal transferring resin is used in the receiving layer.

The coating composition contains the polymer represented by the formula [1] and is preferably usable as the fixable receiving polymer.

The degree of dye fixation may be defined as follows: Four colors of yellow, magenta, cyan and black are outputted onto an image-receiving sheet so as to form 256-gradation solid images thereon; and the reflection density of the obtained image is measured, and the polymer giving the highest reflection density is defined as a receiving polymer of good dye fixability. The dye-fixability of the receiving polymer varies depending on the printer and the ink sheet used, and attention should be paid thereto.

### <UV Absorbent>

The receiving layer may contain a UV absorbent for improving the light fastness thereof. In this, when a polymer UV absorbent is used, it may be fixed to the receiving layer, and may be prevented from diffusing into ink sheet and from subliming and evaporating under heat.

As the UV absorbent, usable are various UV absorbent skeleton-having compounds widely well known in the field of information recording. Concretely, there are mentioned compounds having a skeleton of 2-hydroxybenzotriazole-type UV absorbents, 2-hydroxybenzotriazine-type UV absorbents or 2-hydroxybenzophenone-type UV absorbents. From the viewpoint of the UV absorption capability (absorbent coefficient) and the stability, preferred are compounds having a benzotriazole or triazine skeleton; and from the viewpoint of forming them into polymer or latex, preferred are compounds having a benzotriazole or benzophenone skeleton. Concretely, the UV absorbents described in JP-A 2004-361936 may be used herein.

Preferably, the UV absorbent has an absorption in the UV range and its absorption edges do not step in the visible range. Concretely, when a UV absorbent is added to a receiving layer in producing a thermal transfer image-receiving sheet, it is desirable that the reflection density at 370 nm is Abs 0.5 or more; more preferably the reflection density at 380 nm is Abs 0.5 or more. Also preferably, the reflection density at 400 nm is Abs 0.1 or less. In case where the reflection density within a range over 400 nm is high, it is undesirable since the formed image may yellow.

Preferably in the invention, the UV absorbent to be used is in the form of a polymer preferably having a weight-average molecular weight of at least 10000, more preferably at least 100000. For producing a polymer UV absorbent, preferably employed is a method of grafting a polymer with a UV absorbent. Preferably, the polymer to be the main chain of the polymer UV absorbent has a polymer skeleton of which the dye fixability is poorer than that of the receiving polymer to be combined with it. Also preferably, the polymer film has a sufficient film strength. The grafting ratio of the UV absorbent to the polymer main chain is preferably from 5 to 20% by mass, more preferably from 8 to 15% by mass.

Further preferably, the UV absorbent-grafted polymer is formed into a latex. The polymer UV absorbent latex may be in a water-base coating dispersion that may be formed into a receiving layer by film formation by coating, and therefore it may reduce the production cost. For the latex formation, for example, employable is the method described in Japanese Patent 3450339. The UV absorbent latex is commercially available, for example, as Ipposha Yushi Kogyo's ULS-700, ULS-1700, ULS-1383MA, ULS-1635MH, XL-7016, ULS-933LP, ULS-935LH; Shin-Nakamura Chemical's New Coat UVA-1025W, New Coat UVA-204W, New Coat UVA-4512M (all trade names).

When a UV absorbent-grafted polymer is formed into a latex, it may be mixed with a latex of the above-mentioned dye-fixable receiving polymer, and the resulting mixture may be applied onto a support. Accordingly, a receiving layer with a UV absorbent uniformly dispersed therein may be formed.

The amount of the UV absorbent-grafted polymer or its latex to be added is preferably from 5 to 50 parts by mass relative to the dye-fixable receiving polymer latex that forms the receiving layer, more preferably from 10 to 30 parts by mass.

### <Lubricant>

The receiving layer may contain a lubricant for preventing thermal fusion with a thermal transfer sheet in image formation. For the lubricant, usable are silicone oil, phosphate plasticizers, and fluorine compounds. Especially preferred is silicone oil. As the silicone oil, preferably used is a modified silicone oil, such as epoxy-modified, alkyl-modified, amino-modified, carboxyl-modified, alcohol-modified, fluorine-modified, alkylaralkyl-polyether-modified, epoxy-polyether-modified or polyether-modified one. Above all, preferred is a reaction product of a vinyl-modified silicone oil and a hydrogen-modified silicone oil. The amount of the lubricant to be added is preferably from 0.2 to 30 parts by mass relative to the receiving polymer.

### <Fabricating Method of Receiving Layer>

Preferably in the invention, the receiving layer is formed by applying a water-base coating liquid onto a support and drying it thereon. "Water-base" as referred to herein means that at least 60% by mass of the solvent (dispersion medium) of the coating liquid is water. As the other component than water in the coating liquid, usable is a water-miscible organic solvent such as methyl alcohol, ethyl alcohol, isopropyl alcohol, methyl cellosolve, ethyl cellosolve, dimethylformamide, ethyl acetate, diacetonalcohol, furfuryl alcohol, benzyl alcohol, diethylene glycol monomethyl ether, oxyethyl phenyl ether.

The coating amount of the receiving layer is preferably from 0.5 to 10 g/m² (in terms the solid content of the layer - unless otherwise specifically indicated in this description, the coating amount is in terms of the solid content of the layer) . Preferably, the thickness of the receiving layer is from 1 to 20 µm.

### [Interlayer <underlayer>]

Preferably, an underlayer is formed between the receiving layer and the support. For example, a white background-controlling layer, a static charge-controlling layer, an adhesive layer or a primer layer may be formed. These layers may be formed, for example, in the same manner as in Japanese Patents 3585599, 2925244.

### [Interlayer <heat-insulating layer>]

A heat-insulating layer (foam layer) plays a role of protecting the support from heat in thermal transfer with a thermal head. In addition, it has high cushionability, and therefore, even when paper is used as the substrate, a thermal transfer image-receiving sheet having high printing sensitivity can be obtained.

Preferably, the heat-insulating layer is formed of a hollow polymer.

The hollow polymer as referred to in the invention is polymer particles having closed pores inside the particles, including, for example, (1) non-foamed hollow particles of polystyrene, acrylic resin, styrene-acrylic resin or the like, in which water exists inside the area surrounded by partition walls, and which are such that, after applied onto a support and dried thereon, the water inside the particles evaporates and the particles therefore become hollow, (2) foamed microballoons produced by coating a low-boiling point liquid such as butane, pentane or the like with a resin of any of polyvinylidene chloride, polyacrylonitrile, polyacrylic acid, polyacrylate or their mixture or polymer, which are such that, after applied onto a support and heated thereon, the low-boiling-point liquid inside the particles expands to make the particles hollow, and (3) microballoons produced by previously overheating and foaming the above (2) to give a hollow polymer.

Preferably, the hollow polymer has a porosity of from 20 to 70% or so; and if desired, two or more different types of such hollow polymers may be combined and used herein. Concrete examples of the above (1) are Rohm & Haas' Lowpake 1055, Dai-Nippon Ink's Boncoat PP-1000, JSR's SX866(B), Nippon Zeon's Nippol MH5055 (all trade names). Examples of the above (2) are Matsumoto Yushi Seiyaku's F-30, F-50 (both trade names). Examples of (3) are Matsumoto Yushi Seiyaku's F-30E, Nippon Ferrite's Expancel 461DE, 551DE, 551DE20 (all trade names).

The interlayer containing the hollow polymer contains a water-dispersible resin or a water-soluble resin as a binder resin. The binder resin for use in the invention may be any known resin including acrylic resin, styrene-acryl copolymer, polystyrene resin, polyvinyl alcohol resin, vinyl acetate resin, ethylene-vinyl acetate copolymer, vinyl chloride-vinyl acetate copolymer, styrene-butadiene copolymer, polyvinylidene chloride resin, cellulose derivative, casein, starch, gelatin. These resins may be used either singly or as combined.

The solid content of the hollow polymer in the interlayer is preferably from 5 to 2000 parts by mass relative to 100 parts by mass of the solid content of the binder resin therein. The ratio by mass of the solid content of the hollow polymer to be in the coating liquid is preferably from 1 to 70% by mass, more preferably from 10 to 40% by mass. When the ratio of the hollow polymer is too small, then it could not give sufficient heat insulation; but if too large, the binding force of the hollow polymer to each other may lower, therefore causing problems of powder dropping or film peeling during treatment.

The particle size of the hollow polymer is preferably from 0.1 to 20 µm, more preferably from 0.1 to 2 µm, even more preferably from 0.1 to 1 µm. The glass transition temperature (Tg) of the hollow polymer is preferably not lower than 70°C, more preferably not lower than 100°C.

The heat-insulating layer may be formed of a resin and a foaming agent. The resin of the heat-insulating layer may be any known resin such as urethane resin, acrylic resin, methacrylic resin, modified olefin resin, or their blend. The resin is dissolved and/or dispersed in an organic solvent or water, and the resulting solution or dispersion is used to form a heat-insulating layer. The coating liquid for the heat-insulating layer is preferably a water-base coating liquid not having an influence on the foaming agent. For example, usable is a water-soluble, water-dispersible or SBR latex, an urethane emulsion, a polyester emulsion, an emulsion of vinyl acetate and its copolymer, an acrylic copolymer emulsion such as acryl or acrylstyrene emulsion, a vinyl chloride emulsion or the like emulsion, as well as their dispersion. In case where microspheres to be mentioned below are used as a foaming agent, use is preferred of an emulsion of vinyl acetate and its copolymer, or an acrylic copolymer emulsion such as acryl or acrylstyrene emulsion, among the above-mentioned resins.

These resins may be readily controlled for their glass transition point, flexibility and film formability by varying the type and the blend ratio of the monomer to be copolymerized. Accordingly, they are favorable in that they may have desired physical properties even though a plasticizer or a filming promoter is not added thereto, that they are hardly discolored during storage in various environments after film formation, and that their physical properties are deteriorated little with time. Of the above resins, an SBR latex is unfavorable, since its glass transition point is generally low and since it often causes a problem of blocking and after, film formation, it often yellows during storage. Many types of an urethane emulsion contain a solvent such as NMP or DMF, and are therefore unfavorable as having some negative influence on the foaming agent. A polyester emulsion or dispersion and a vinyl chloride emulsion are unfavorable, since their glass transition point is generally high, and they may worsen the foamability of microspheres. Some are soft, and they are made flexible owing to addition of plasticizer thereto, and their use is unfavorable.

The foamability of the foaming agent is greatly influenced by the hardness of the resin. In order that the foaming agent could foam to a desired foaming magnification, it is desirable that the glass transition point of the resin is from -30 to 20°C or the lowermost film-forming temperature thereof is not higher than 20°C. The resin having a glass transition point of 20°C or higher may have poor flexibility and the foamability of the foaming agent may lower. The resin having a glass transition point of -30°C or lower may cause a problem of blocking owing to its stickiness (when the substrate with a heat-insulating layer formed thereon is wound up, the heat-insulating layer sticks to the back of the substrate as "blocking"), or when the thermal transfer image-receiving sheet is cut, it could not be cut safely and accurately (when the image-receiving sheet is cut, the resin of the heat-insulating layer may adhere to the cutter edge and, as a result, the appearance of the cut sheet may be poor or the cutting dimension may be out of order). The resin having a lowermost film-forming temperature is 20°C or higher may cause a problem of filming failure in coating and drying, and the film surface may have a trouble of cracking.

As the foaming agent, any known foaming agent is usable herein, including, for example, a decomposition-type foaming agent that decomposes under heat to generate a gas such as oxygen, carbon dioxide or nitrogen, such as dinitropentamethylenetetramine, diazoaminobenzene, azobisisobutyronitrile, azodicarbonamide; and microspheres prepared by coating a low-boiling point liquid such as butane or pentane with a resin such as polyvinylidene chloride or polyacrylonitrile to form microcapsules. Of those, preferably used are microspheres prepared by coating a low-boiling point liquid such as butane or pentane with a resin such as polyvinylidene chloride or polyacrylonitrile to form microcapsules. After the heat-insulating layer is formed, the foaming agent therein may foam under heat, and after thus foamed, it exhibits high cushionability and good heat insulation. The amount of the foaming agent to be used is preferably within a range of from 0.5 to 100 parts by mass relative to 100 parts by mass of the resin to form the heat-insulating layer. When the amount is less than 0.5 parts by mass, the cushionability of the heat-insulating layer is poor, and the heat-insulating layer may be ineffective. When the amount is more than 100 parts by mass, the porosity after foaming may be too high and the mechanical strength of the heat-insulating layer may be low, and the layer could not be resistant to ordinary use. In addition, the surface of the heat-insulating layer may lose the smoothness, therefore having some negative influence on the outward appearance and the print quality. Preferably, the overall thickness of the heat-insulating layer is from 30 to 100 µm. When the thickness is less than 30 µm, then the cushionability and the heat insulation may be poor; but when more than 100 µm, then the effect of the heat-insulating layer could not more increase and the strength thereof may lower. Regarding the particle size of the foaming agent, the volume-average particle size thereof before foaming is preferably from 5 to 15 µm or so, and the particle size after foaming is preferably from 20 to 50 µm. When the volume-average particle size before foaming is less than 5 µm, or when the particle size after foaming is less than 20 µm, the cushioning effect of the foaming agent may be poor; but when the volume-average particle size before foaming is more than 15 µm, or when the particle size after foaming is more than 50 µm, then it is unfavorable since the surface of the heat-insulating layer may be rough, therefore having some negative influence on the quality of the formed image.

Of the foaming agents, especially preferred are low-temperature-foaming microspheres of which the partition wall softening temperature and the foaming starting temperature is not higher than 100°C and the optimum foaming temperature (the temperature at which the foaming magnification is the highest within a heating time of 1 minute) is not higher than 140°C, and it is desirable that the heating condition in foaming with them is at a temperature as low as possible. Using such microspheres having a low foaming temperature makes it possible to prevent thermal shrinking or curling of the substrate in foaming. The microspheres having such a low foaming temperature may be prepared by controlling the content of the thermoplastic resin such as polyvinylidene chloride or polyacrylonitrile that form the partition walls. Their volume-average particle size is from 5 to 15 µm. The heat-insulating layer formed by the use of the microspheres is advantageous in that the foams formed by foaming are closed cells, that the microspheres foam in a simple step of heating, and that the thickness of the heat-insulating layer may be readily controlled by changing the content of the microspheres in the layer.

However, the microspheres are unstable to organic solvent, and when an organic solvent is used for the coating liquid for the heat-insulating layer, then the partition walls of the microspheres may be corroded to lower the foamability thereof. Accordingly, in case where the above-mentioned microspheres are used, it is desirable to use a water-base coating liquid not containing an organic solvent that may corrode the partition walls of the microspheres. The corrosive organic solvent includes, for example, ketones such as acetone, methyl ethyl ketone; esters such as ethyl acetate; lower alcohols such as methanol, ethanol. Accordingly, preferred is use of a water-base coating liquid, concretely those containing a water-soluble or water-dispersible resin, or those containing a resin emulsion, preferably an acryl-styrene emulsion or modified vinyl acetate emulsion. However, even when a water-base coating liquid is used in forming the heat-insulating layer, a high-boiling-point organic solvent such as NMP, DMF or cellosolve, if used therein as a co-solvent or as a filming promoter or a plasticizer, it may have some influence on the microspheres. In such a case, therefore, the composition of the water-base resin to be used and the amount of the high-boiling-point organic solvent to be added must be grasped, and attention must be paid thereto as to whether or not they may have some negative influence on the microcapsules.

Preferably, the interlayer (including underlayer and heat-insulating layer) contains gelatin. The amount of gelatin to be in the coating liquid for the interlayer is preferably from 0.5 to 14% by mass, more preferably from 1 to 6% by mass. The coating amount of the hollow polymer in the interlayer is preferably from 1 to 100 g/m², more preferably from 5 to 20 g/m².

Preferably, the thickness of the interlayer containing a hollow polymer is from 5 to 50 µm, more preferably from 5 to 40 µm.

### (Support)

As the support, used is coated paper or WP paper (double laminate paper).

### -Coated Paper-

The coated paper is a type of paper prepared by applying various resin, rubber latex or polymer material onto one or both surfaces of a sheet of raw paper. Depending on its use, the coating amount varies. The coated paper includes, for example, art paper, cast coated paper, Yankee paper.

As the resin to be applied to the surface of the raw paper, it is suitable to use a thermoplastic resin. The thermoplastic resin includes, for example, the following resins (a) to (h).
(a) This group includes polyolefin resins such as polyethylene resin, polypropylene resin; copolymer resins of olefin such as ethylene or propylene with any other vinyl monomer; acrylic resins.
(b) This is an ester bond-having thermoplastic resin. It includes, for example, polyester resins obtained through condensation of a dicarboxylic acid component (the dicarboxylic acid component may be substituted with a sulfonic acid group or a carboxylic acid group) and an alcohol component (the alcohol component may be substituted with a hydroxyl group); polyacrylate resins or polymethacrylate resins such as polymethyl methacrylate, polybutyl methacrylate, polymethyl acrylate, polybutyl acrylate; polycarbonate resins, polyvinyl acetate resins, styrene-acrylate resins, styrene-methacrylate copolymer resins, vinyltoluene-acrylate resins.
   Concretely, there are mentioned the resins described in JP-A 59-101395, 63-7971, 63-7972, 63-7973, 60-294862.
   Commercial products of various thermoplastic resins usable herein are Toyobo's Vylon 290, Vylon 200, Vylon 280, Vylon 300, Vylon 103, Vylon GK-140, Vylon GK-130; Kao's Tafton NE-382, Tafton U-5, ATR-2009, ATR-2010; Unitika's Elitel UE3500, UE3210, XA-8153, KZA-7049, KZA-1449; Nippon Synthetic Chemical's Polyester TP-220, R-188; Seiko Chemical Industry's Hi-Ros Series (all trade names).
(c) This includes polyurethane resins.
(d) This includes polyamide resins and urea resins.
(e) This includes polysulfone resins.
(f) This includes polyvinyl chloride resins, polyvinylidene chloride resins, vinyl chloride-vinyl acetate copolymer resins, vinyl chloride-vinyl propionate copolymer resins.
(g) This includes polyol resins such as polyvinyl butyral; and cellulose resins such as ethyl cellulose resins, cellulose acetate resins.
(h) This includes polycaprolactone resins, styrene-maleic anhydride resins, polyacrylonitrile resins, polyether resins, epoxy resins, phenolic resins.

One or more of the above-mentioned thermoplastic resins may be used herein either singly or as combined.

If desired, brightener, conductive agent, filler, titanium oxide, ultramarine, carbon black, and other pigment or dye may be added to the thermoplastic resin.

### -Laminate Paper-

The laminate paper is a type of paper produced by laminating various resin, rubber or polymer sheet or film on a sheet of raw paper. The laminate material includes, for example, polyolefin, polyvinyl chloride, polyethylene terephthalate, polystyrene, polymethacrylate, polycarbonate, polyimide, triacetyl cellulose. One or more these resins may be used either singly or as combined.

As the polyolefin, generally used is low-density polyethylene. For increasing the heat resistance of the support, preferably used is polypropylene, a blend of polypropylene and polyethylene, high-density polyethylene, or a blend of high-density polyethylene and low-density polyethylene. In particular, from the viewpoint of the cost and the lamination aptitude, most preferred is a blend of high-density polyethylene and low-density polyethylene.

The blend of high-density polyethylene and low-density polyethylene is used, for example, in a blend ratio (by mass) of from 1/9 to 9/1. The blend ratio is preferably from 2/8 to 8/2, more preferably from 3/7 to 7/3. In case where the thermoplastic resin layer is formed on both surfaces of the support, it is desirable that high-density polyethylene or a blend of high-density polyethylene and low-density polyethylene is applied to the back of the support to form a laminate layer thereon. The molecular weight of polyethylene is not specifically defined. Preferably, high-density polyethylene and low-density polyethylene both have a melt index of from 1.0 to 40 g/10 min, and have good extrudability.

The sheet or the film may be processed for white reflectivity. For the treatment, for example, employable is a method of adding a pigment such as titanium oxide to the sheet or the film.

The thickness of the support is preferably from 25 µm to 300 µm, more preferably from 50 µm to 260 µm, even more preferably from 75 µm to 220 µm. The rigidity of the support may be on a different level, depending on the use thereof. As the support for electrophotographic image-receiving sheets for photograph-level image quality, it is preferably near to the support for silver salt color photography.

### [Curl-Controlling Layer]

When the support is directly exposed out, the thermal transfer image-receiving sheet may curl depending on the humidity and the temperature in the environment. Accordingly, a curl-controlling layer is preferably formed on the back of the support. The curl-controlling layer acts not only for preventing the image-receiving sheet from curling but also for waterproofness. For the curl-controlling layer, usable is a polyethylene laminate or a polypropylene laminate. Concretely, for example, the layer may be formed as in JP-A, 61-110135, 6-202295.

### [Writing Layer, Static Charge-Controlling Layer]

For the writing layer and the static charge-controlling layer, usable are inorganic oxide colloid, ionic polymer, etc. As the antistatic layer, for example, usable is any of a cationic antistatic agent such as quaternary ammonium salts, polyamine derivatives; an anionic antistatic agent such as alkylphosphates; and a nonionic antistatic agent such as fatty acid esters. Concretely, for example, the layer may be formed in the same manner as in Japanese Patent 3585585.

### <Fabricating Method of Thermal Transfer Image-receiving Sheet

The thermal transfer image-receiving sheet of the invention is preferably fabricated by simultaneously forming at least one interlayer and a receiving layer on a support. In case where a multilayer-structured image-receiving sheet is fabricated, which comprises plural layers having plural different functions (foam layer, heat-insulating layer, interlayer, receiving layer) formed on a support, some known methods may be employed. For example, the constitutive layers may be successively formed by coating, as in JP-A 2004-106283, 2004-181888, 2004-345267; or the layers are previously formed on separate supports, and they are laminated together.

On the other hand, in the field of photography, for example, it is known that plural layers are simultaneously formed by coating, whereby the producibility may be greatly improved. For example, known are a slide coating method and a curtain coating method, as described in USP 2,761,791, 2,681,234, 3,508,947, 4,457,256, 3,993,019; JP-A 63-54975, 61-278848, 55-86557, 52-31727, 55-142565, 50-43140, 63-80872, 54-54020, 5-104061, 5-127305, JP-B 49-7050, or in Edgar B. Gutoff, et al., "Coating and Drying Defects: Troubleshooting Operating Problems", John Wiley & Sons, 1995, pp. 101-103.

In the invention, the plural layers are formed to have a resin as the main ingredient thereof. Preferably, the coating liquid for the layers is an aqueous dispersion latex. The solid content by mass of the resin as a latex in the coating liquid for the layers is preferably from 5 to 80%, more preferably from 20 to 60%. The mean particle size of the resin in the aqueous dispersion latex is preferably at most 5 µm, more preferably at most 1 µm. If desired, the aqueous dispersion latex may contain a known additive such as surfactant, dispersant, binder resin.

In the invention, it is desirable that a laminate of plural layers is formed on a support according to the method described in USP 2,761,791, and then rapidly solidified. In case where a multilayer constitution is formed through resin solidification in one example, it is desirable that plural layers are formed on a support and then immediately heated. In case where the layer contains a binder capable of gelling at a low temperature, such as gelatin, it may be desirable that plural layers are formed on a support and the temperature is then immediately lowered.

In the invention, the coating amount of the coating liquid per one layer to constitute the multilayer constitution is preferably within a range of from 1 g/m² to 500 g/m². The number of the layers of the multilayer constitution may be 2 or more, and may be suitably selected. Preferably, the receiving layer is provided as the remotest layer from the support.

### [Image Formation]

In thermal transfer image formation, the thermal transfer sheet (ink sheet) to be combined with the thermal transfer image-receiving sheet of the invention comprises a dye layer containing a diffusive transfer dye, formed on a support. Any desired ink sheet may be used herein. The method of applying heat energy in thermal transfer may be any known conventional method. For example, using a recording device such as thermal printer (e. g. , Hitachi's trade name, Video Printer VY-100), the recording time may be controlled, and heat energy of from 5 to 100 mJ/mm² or so may be given to the sheet to fully attain the intended object.

For the thermal transfer image-receiving sheet, the support may be suitably selected. Depending on the type of the support selected for it, the thermal transfer image-receiving sheet of the invention may be in any form of cut sheet, rolls, cards, or sheets for producing transmissive originals. The invention is directed to any of these applications.

The invention is described in more detail with reference to the following Examples, to which, however, the invention should not be limited.

### EXAMPLES

The invention is described in more detail with reference to the following Examples and Reference Examples. In Examples, the material used, its amount and the ratio, the details of the treatment and the treatment process may be suitably modified or changed not overstepping the scope of the invention. Accordingly, the invention should not be limitatively interpreted by the Examples mentioned below. Unless otherwise specifically indicated, part and% in Examples are all by mass.

### [Example 1]

### (Preparation of Polymer Latex)

### (1-1) Preparation of Polymer Latex P-2:

Distilled water (500 g), vinylidene chloride (174 g), vinyl acetate (90 g), acrylic acid (6 g), monomer M-2 (30 g), Pionine A-43-S (trade name by Takemoto Yushi) (12 g), and APS (ammonium peroxodisulfate, by Wako Pure Chemicals) (2.25 g) were put into a reactor equipped with a stirrer and a reflux condenser, and heated in a nitrogen atmosphere at 70°C for 6 hours to complete the reaction, thereby obtaining a polymer latex P-2. Its mass-average molecular weight was 1.26 × 10⁵. The mean particle size of the polymer particles was 128.5 nm.

### (1-2) Preparation of Polymer Latex P-5:

Distilled water (500 g), styrene (90 g), acrylonitrile (60 g), dodecyl acrylate (135 g), acrylic acid (6 g), monomer M-3 (9 g), Pionine A-43-S (trade name by Takemoto Yushi) (12 g), and APS (2.25 g) were put into a reactor equipped with a stirrer and a reflux condenser, and heated in a nitrogen atmosphere at 70°C for 6 hours to complete the reaction, thereby obtaining a polymer latex P-5. Its mass-average molecular weight was 3.39 × 10⁵. The mean particle size of the polymer particles was 140.3 nm.

### (1-3) Preparation of Polymer Latex P-10:

Distilled water (500 g), styrene (84 g), acrylonitrile (60 g), benzyl methacrylate (30 g), 2-ethylhexyl acrylate (45 g), dodecyl acrylate (45 g), polyethylene glycol methyl ether methacrylate (15 g), monomer M-2 (15 g), acrylic acid (6 g), Pionine A-43-S (trade name by Takemoto Yushi) (12 g), and APS (2.25 g) were put into a reactor equipped with a stirrer and a reflux condenser, and heated in a nitrogen atmosphere at 70°C for 6 hours to complete the reaction, thereby obtaining a polymer latex P-10. Its mass-average molecular weight was 2.69 × 10⁵. The mean particle size of the polymer particles was 88.8 nm.

### (1-4) Preparation of Polymer Latex P-11:

Distilled water (500 g), styrene (90 g), methacrylonitrile (30 g), benzyl methacrylate (60 g), 2-ethylhexyl acrylate (30 g), lauroxy polyethylene glycol acrylate (60 g), monomer M-1 (24 g), acrylic acid (6 g), Pionine A-43-S (trade name by Takemoto Yushi) (12 g), and APS (2.25 g) were put into a reactor equipped with a stirrer and a reflux condenser, and heated in a nitrogen atmosphere at 70°C for 6 hours to complete the reaction, thereby obtaining a polymer latex P-11. Its mass-average molecular weight was 2.69 × 10⁵. The mean particle size of the polymer particles was 108.8 nm.

### (1-5) Preparation of Comparative Polymer Latex P-2':

Distilled water (500 g), vinylidene chloride (189 g), vinyl acetate (105 g), acrylic acid (6 g), Pionine A-43-S (trade name by Takemoto Yushi) (12 g), and APS (ammonium peroxodisulfate, by Wako Pure Chemicals) (2.25 g) were put into a reactor equipped with a stirrer and a reflux condenser, and heated in a nitrogen atmosphere at 70°C for 6 hours to complete the reaction, thereby obtaining a polymer latex P-2'. Its mass-average molecular weight was 1.26 × 10⁵. The mean particle size of the polymer particles was 95.5 nm.

### (1-6) Preparation of Comparative Polymer Latex P-5':

Distilled water (500 g), styrene (93 g), acrylonitrile (63 g), dodecyl acrylate (138 g), acrylic acid (6 g), Pionine A-43-S (trade name by Takemoto Yushi) (12 g), and APS (2.25 g) were put into a reactor equipped with a stirrer and a reflux condenser, and heated in a nitrogen atmosphere at 70°C for 6 hours to complete the reaction, thereby obtaining a polymer latex P-5'. Its mass-average molecular weight was 3.39 × 10⁵. The mean particle size of the polymer particles was 85.3 nm.

### (1-7) Preparation of Polymer Latex P-10':

Distilled water (500 g), styrene (89 g), acrylonitrile (65 g), benzyl methacrylate (35 g), 2-ethylhexyl acrylate (45 g), dodecyl acrylate (45 g), polyethylene glycol methyl ether methacrylate (15 g), acrylic acid (6 g), Pionine A-43-S (trade name by Takemoto Yushi) (12 g), and APS (2.25 g) were put into a reactor equipped with a stirrer and a reflux condenser, and heated in a nitrogen atmosphere at 70°C for 6 hours to complete the reaction, thereby obtaining a polymer latex P-10'. Its mass-average molecular weight was 2.69 × 10⁵. The mean particle size of the polymer particles was 120.8 nm.

### (1-8) Preparation of Polymer Latex P-11':

Distilled water (500 g), styrene (104 g), methacrylonitrile (33 g), benzyl methacrylate (65 g), 2-ethylhexyl acrylate (33 g), lauroxy polyethylene glycol acrylate (65 g), acrylic acid (6 g), Pionine A-43-S (trade name by Takemoto Yushi) (12 g), and APS (2.25 g) were put into a reactor equipped with a stirrer and a reflux condenser, and heated in a nitrogen atmosphere at 70°C for 6 hours to complete the reaction, thereby obtaining a polymer latex P-11'. Its mass-average molecular weight was 3.51 × 10⁵. The mean particle size of the polymer particles was 88.8 nm.

### (Fabrication of Thermal Transfer Image-receiving Sheet)

### (2-1) Fabrication of Sample 101 (Comparative Example 1):

The surface of a paper support double-laminated with polyethylene was processed for corona discharge treatment, and then a sodium dodecylbenzenesulfonate-containing gelatin underlayer was formed on it. On this, an interlayer and a receiving layer A each having the composition mentioned below were formed in such a manner that the layers were laminated in that order from the side of the support, according to the method illustrated in Fig. 9 in USP 2,761,791. Immediately after the coating, this was dried at 50°C for 16 hours. The dry coating amount of the interlayer was 15 g/m²; and that of the receiving layer A was 3.0 g/m².

### Interlayer:

| | |
|---|---|
| Hollow polymer latex (MH5055, trade name by Nippon Zeon) | 563 mas.pts. |
| Gelatin | 120 mas.pts. |

In this, the hollow polymer latex is an aqueous dispersion of a hollow-structured polymer having an outer diameter of 0.5 µm.

### Receiving Layer A:

This is the same as the receiving layer described in Example 1 of Japanese Patent 3410152.

### (2-2) Fabrication of Sample 102 (Comparative Example 2):

The constitutive layers were formed in the same manner as that for the sample 101, for which, however, the receiving layer A was changed to a receiving layer B having the composition mentioned below. Immediately after the coating, this was dried at 50°C for 16 hours. The dry coating amount of the interlayer was 15 g/m²; and that of the receiving layer B was 3.0 g/m².

| | |
|---|---|
| Receiving Layer B: | |
| Vinyl chloride-type latex (Vinybran 601, trade name Chemical Industry) by Nisshin | 48 mas.pts. |
| Benzotriazole-type UV absorbent polymer latex (ULS1700, trade name by Ipposha Yushi Kogyo) | 15 mas.pts. |
| Polyether-modified silicone (KF615-A, by Shin-etsu Chemical Industry) | 2 mas.pts. |

### (2-3) Fabrication of Sample 103 (Comparative Example 3):

The constitutive layers were formed in the same manner as that for the sample 101, for which, however, the receiving layer A was changed to a receiving layer C having the composition mentioned below. Immediately after the coating, this was dried at 50°C for 16 hours. The dry coating amount of the interlayer was 15 g/m²; and that of the receiving layer C was 3.0 g/m².

| | |
|---|---|
| Receiving Layer C: | |
| Polymer latex P-2' | 48 mas.pts. |
| Benzotriazole-type UV absorbent polymer latex (ULS1700, trade name by Ipposha Yushi Kogyo) | 15 mas.pts. |
| Montan wax (J537, trade name by Chukyo Yushi) | 10 mas.pts. |

### (2-4) Fabrication of Sample 104 (Comparative Example 4):

The constitutive layers were formed in the same manner as that for the sample 102, for which, however, the receiving layer B was changed to a receiving layer D having the composition mentioned below. Immediately after the coating, this was dried at 50°C for 16 hours. The dry coating amount of the interlayer was 15 g/m²; and that of the receiving layer D was 3.0 g/m².

| | |
|---|---|
| Receiving Layer D: | |
| Polymer latex P-5' | 48 mas.pts. |
| Benzotriazole-type UV absorbent polymer latex (ULS1700, trade name by Ipposha Yushi Kogyo) | 15 mas.pts. |
| Montan wax (J537, trade name by Chukyo Yushi) | 10 mas.pts. |

### (2-5) Fabrication of Sample 105 (Comparative Example 5):

The constitutive layers were formed in the same manner as that for the sample 102, for which, however, the receiving layer B was changed to a receiving layer E having the composition mentioned below. Immediately after the coating, this was dried at 50°C for 16 hours. The dry coating amount of the interlayer was 15 g/m²; and that of the receiving layer E was 3.0 g/m². Receiving Layer E:

| | |
|---|---|
| Polymer latex P-10' | 48 mas.pts. |
| Benzotriazole-type UV absorbent polymer latex (ULS1700, trade name by Ipposha Yushi Kogyo) | 15 mas.pts. |
| Montan wax (J537, trade name by Chukyo Yushi) | 10 mas.pts. |

### (2-6) Fabrication of Sample 106 (Comparative Example 6):

The constitutive layers were formed in the same manner as that for the sample 102, for which, however, the receiving layer B was changed to a receiving layer F having the composition mentioned below. Immediately after the coating, this was dried at 50°C for 16 hours. The dry coating amount of the interlayer was 15 g/m²; and that of the receiving layer F was 3.0 g/m².

| | |
|---|---|
| Receiving Layer F: | |
| Polymer latex P-11' | 48 mas.pts. |
| Benzotriazole-type UV absorbent polymer latex (ULS1700, trade name by Ipposha Yushi Kogyo) | 15 mas.pts. |
| Montan wax (J537, trade name by Chukyo Yushi) | 10 mas.pts. |

### (2-7) Fabrication of Sample 107 (the invention):

The constitutive layers were formed in the same manner as that for the sample 102, for which, however, the receiving layer B was changed to a receiving layer F having the composition mentioned below. Immediately after the coating, this was dried at 50°C for 16 hours. The dry coating amount of the interlayer was 15 g/m²; and that of the receiving layer G was 3.0 g/m².

| | |
|---|---|
| Receiving Layer G: | |
| Polymer latex P-2 | 58 mas.pts. |
| Benzotriazole-type UV absorbent polymer latex (ULS1700, trade name by Ipposha Yushi Kogyo) | 15 mas.pts. |

### (2-8) Fabrication of Sample 108 (the invention):

The constitutive layers were formed in the same manner as that for the sample 102, for which, however, the receiving layer B was changed to a receiving layer G having the composition mentioned below. Immediately after the coating, this was dried at 50°C for 16 hours. The dry coating amount of the interlayer was 15 g/m²; and that of the receiving layer H was 3.0 g/m².

### Receiving Layer H:

| | |
|---|---|
| Polymer latex P-5 | 58 mas.pts. |
| Benzotriazole-type UV absorbent polymer latex (ULS1700, trade name by Ipposha Yushi Kogyo) | 15 mas.pts. |

### (2-9) Fabrication of Sample 109 (the invention):

The constitutive layers were formed in the same manner as that for the sample 102, for which, however, the receiving layer B was changed to a receiving layer I having the composition mentioned below. Immediately after the coating, this was dried at 50°C for 16 hours. The dry coating amount of the interlayer was 15 g/m²; and that of the receiving layer I was 3.0 g/m².

| | |
|---|---|
| Receiving Layer I: | |
| Polymer latex P-10 | 58 mas.pts. |
| Benzotriazole-type UV absorbent polymer latex (ULS1700, trade name by Ipposha Yushi Kogyo) | 15 mas.pts. |

### (2-10) Fabrication of Sample 110 (the invention):

The constitutive layers were formed in the same manner as that for the sample 102, for which, however, the receiving layer B was changed to a receiving layer I having the composition mentioned below. Immediately after the coating, this was dried at 50°C for 16 hours. The dry coating amount of the interlayer was 15 g/m²; and that of the receiving layer J was 3.0 g/m². Receiving Layer J:

| | |
|---|---|
| Polymer latex P-11 | 58 mas.pts. |
| Benzotriazole-type UV absorbent polymer latex (ULS1700, trade name by Ipposha Yushi Kogyo) | 15 mas.pts. |

### (Fabrication of Ink Sheet 1)

A polyester film (Lumirror, trade name by Toray) having a thickness of 6.0 µm was used as a support film. A heat-resistant slip layer (thickness 1 µm) was formed on the back of the film, and yellow, magenta and cyan compositions mentioned below were applied each as single color (coating amount of the dry film, 1 g/m²).

### Yellow composition:

| | |
|---|---|
| Dye (Macrolex Yellow 6G, trade name by Bayer) | 5.5 mas.pts. |
| Polyvinyl butyral resin (Eslec BX-1, trade name by Sekisui Chemical Industry) | 4.5 mas.pts. |
| Methyl ethyl ketone/toluene (1/1 by mass) | 90 mas.pts. |

### Magenta composition:

| | |
|---|---|
| Magenta dye (Disperse Red 60) | 5.5 mas.pts. |
| Polyvinyl butyral resin (Eslec BX-1, trade name by Sekisui Chemical Industry) | 4.5 mas.pts. |
| Methyl ethyl ketone/toluene (1/1 by mass) | 90 mas.pts. |

### Cyan composition:

| | |
|---|---|
| Cyan dye (Solvent Blue 63) | 5.5 mas.pts. |
| Polyvinyl butyral resin (Eslec BX-1, trade name by Sekisui Chemical Industry) | 4.5 mas.pts. |
| Methyl ethyl ketone/toluene (1/1 by mass) | 90 mas.pts. |

### (Image formation and Evaluation)

The above Ink Sheet 1 and the above image-receiving sheet samples 101 to 110 were processed so as to be charged in a sublimation-type printer, Nippon Densan Copal's DPB1500 (trade name. Set in the printer, these were tested for image outputting according to a high-speed print mode to give an entire area gray gradation from the lowermost density to the highest density. In this case, the printer took 13 seconds for outputting one L-size print.

### (Relative Transfer Density Evaluation)

The visual density of the black image obtained under the above condition was determined, using Photographic Densitometer (trade name by X-Rite Incorporated). Table 1 shows the relative value of the transfer density of each sample, based on standard value 100 of sample 101. The results were shown in Table 1.

### (Lubricity Evaluation)

The lubricity between the ink sheet and the image-receiving sheet was evaluated as follows: A solid image having a maximum density was outputted on the receiving sheet, and its surface was checked for streaky unevenness (sticking). In addition, the device was checked for noise, if any, during this treatment, and the lubricity was evaluated by the noise level.

### (Transferability of the Protective Layer Evaluation)

The transferability of the protective layer was evaluated by checking the surface of the outputted gray gradation image for the unevenness of protective layer transference.

From the results, the samples were evaluated according to the evaluation ranks mentioned below, and the results were shown in Table 1.
Evaluation Ranks:
A: Good with no problem in practical use.
B: Poorer than A, but on acceptable level in practical use.
C: Bad with problematic in practical use, and on an unacceptable level.

**Table 1**

| | Relative Transfer Density | Sticking | Peeling Noise | Protective Layer Transfer Unevenness |
|---|---|---|---|---|
| Sample 101 (Comparative Example) | 100 | C | C | A |
| Sample 102 (Comparative Example) | 112 | B | B | B |
| Sample 103 (Comparative Example) | 105 | B | C | B |
| Sample 104 (Comparative Example) | 114 | C | B | A |
| Sample 105 (Comparative Example) | 118 | B | B | B |
| Sample 106 (Comparative Example) | 120 | B | B | B |
| Sample 107 (Example) | 110 | A | B | A |
| Sample 108 (Example) | 115 | B | A | A |
| Sample 109 (Example) | 120 | A | A | A |
| Sample 110 (Example) | 123 | A | A | A |

As is obvious from the results in Table 1, the samples 107 to 110 of the invention have no problem in the traveling capability thereof, and satisfy both the requirements of ink sheet releasability and protective layer transferability. As in these, when the coating composition for thermal transfer image-receiving sheet of the invention, which is characterized by containing a polymer latex having a polysiloxane structure of formula [1] in the side chain, is used, a thermal transfer sheet can be obtained, which gives a good image having no protective layer transfer unevenness and having a high transfer density in rapid processing treatment, which is free from image failures caused by thermal fusion with ink, and which is also free from a trouble in sheet traveling.

### [Example 2]

Samples were fabricated in the same manner as in Example 1, for which, however, the UV absorbent polymer latex, ULS1700 (trade name by Ipposha Yushi Kogyo) was changed to ULS1635MH (trade name by Ipposha Yushi Kogyo). Its amount was so controlled that the solid content of the polymer latex, as part by mass, could be the same in these. The samples were tested in the same manner as in Example 1, and the samples of the invention had good results also in Example 2.

### [Example 3]

Samples were fabricated in the same manner as in Example 1, for which, however, Ink Sheet 1 was changed to Ink Sheet 2 mentioned below. The samples were tested in the same manner as in Example 1 and 2, and the samples of the invention had good results also in Example 3.

### (Fabrication of Ink Sheet 1)

A polyester film with adhesion improving treatment on one side (Diahoil K200E-6F, trade name by Mitsubishi Polyester Film, Inc.) having a thickness of 6.0 µm was used as a support film. A coating liquid for back layer mentioned below was applied on the other side of adhesion improving treatment side (coating amount of the dry film, 1 g/m²) and dried, and after drying this was cured by heat treatment at 60°C.

A coating liquid for yellow, magenta and cyan dye layer and transferable protective layer laminates, each mentioned below, were applied in this order on the adhesion improving treated side of the polyester film prepared above (coating amount of the dry film, 0.8 g/m², each layer).

The transferable protective layer laminates were prepared by the following method: A coating liquid for release layer was applied on the polyester film and dried, then a coating liquid for protective layer was applied on it and dried, moreover a coating liquid for adhesion layer was applied on it. Coating liquid for back layer:

| | |
|---|---|
| Acrylate polyol resin (Acrydic A-801, trade name by DAINIPPON INK AND CHEMICALS, Inc.) | 26.0 mas.pts. |
| Zinc stearate (SZ-2000, trade name by Sakai Chemical Industry Co., Ltd.) | 0.43 mas.pts. |
| Phosphoric ester (Prisurf A217, trade name by Dai-ichi Kogyo Seiyaku Co., Ltd.) | 1.27 mas.pts. |
| Isocyanate (50% solution) | |
| (Barnok D-800, trade name by Dai-ichi Kogyo Seiyaku Co., Ltd.) | 8.0 mas.pts. |
| Methyl ethyl ketone/toluene (2/1 by mass) | 64 mas.pts. |
| Coating liquid for yellow dye layer: | |
| Dye composition (Y-1) | 3.9 mas.pts. |
| Dye composition (Y-2) | 3.9 mas.pts. |
| Polyvinyl acetal resin (Eslec KS-1, trade name by Sekisui Chemical Industry) | 6.1 mas.pts. |
| Polyvinyl butyral resin (Denka Butyral #6000-C, trade name by DENKI KAGAKU KOGYO KABUSHIKI KATSHA) | 2.1 mas.pts. |
| Release agent (X-22-3000T, trade name by Shin-Etsu Chemical Co., Ltd.) | 0.05 mas.pts. |
| Release agent (TSF4701, trade name by Momentive Performance Materials Inc.) | 0.03 mas.pts. |
| Matte agent (FLO - THENE UF, trade name by Sumitomo Seika Chemicals Company,Limited) | 0.15 mas.pts. |
| Methyl ethyl ketone/toluene (2/1 by mass) | 84 mas.pts. |

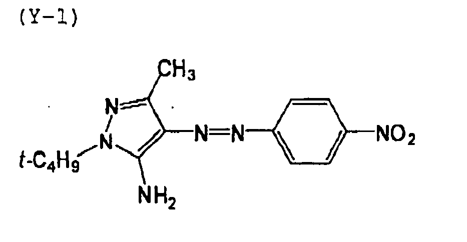

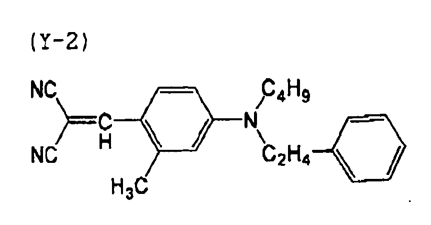

### Coating liquid for magenta dye layer:

| | |
|---|---|
| Dye composition (M-1) | 0.1 mas.pts. |
| Dye composition (M-2) | 0.7 mas.pts. |
| Dye composition (M-3) | 6.6 mas.pts. |
| Polyvinyl acetal resin (Eslec KS-1, trade name by Sekisui Chemical Industry) | 8.0 mas.pts. |
| Polyvinyl butyral resin (Denka Butyral #6000-C, trade name by DENKI KAGAKU KOGYO KABUSHIKI KAISHA) | 0.2 mas.pts. |
| Release agent (X-22-3000T, trade name by Shin-Etsu Chemical Co., Ltd.) | 0.05 mas.pts. |
| Release agent (TSF4701, trade name by Momentive PerformanceMaterials Inc.) | 0.03 mas.pts. |
| Matte agent (FLO - THENE UF, trade name by Sumitomo Seika Chemicals Company, Limited) | 0.15 mas.pts. |
| Methyl ethyl ketone/toluene (2/1 by mass) | 84 mas.pts. |

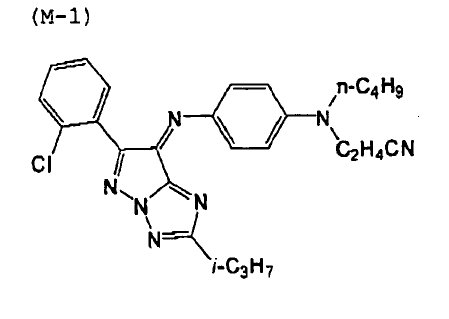

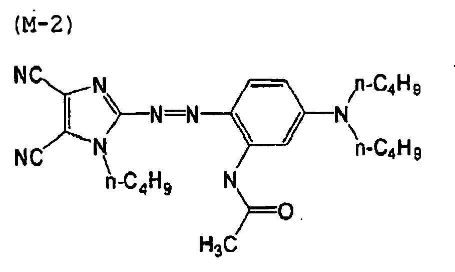

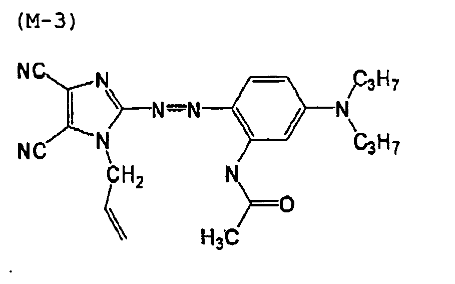

### Coating liquid for cyan dye layer:

| | |
|---|---|
| Dye composition (C-1) | 1.2 mas.pts. |
| Dye composition (C-2) | 6.6 mas.pts. |
| Polyvinyl acetal resin (Eslec KS-1, trade name by Sekisui Chemical Industry) | 7.4 mas.pts. |
| Polyvinyl butyral resin (Denka Butyral #6000-C, trade name by DENKI KAGAKU KOGYO KABUSHIKI KAISHA) | 0.8 mas.pts. |
| Release agent (X-22-3000T, trade name by Shin-Etsu Chemical Co., Ltd.) | 0.05 mas.pts. |
| Release agent (TSF4701, trade name by Momentive Performance Materials Inc.) | 0.03 mas.pts. |
| Matte agent (FLO - THENE UF, trade name by Sumitomo Seika Chemicals Company, Limited) | 0.15 mas.pts. |
| Methyl ethyl ketone/toluene (2/1 by mass) | 84 mas.pts. |

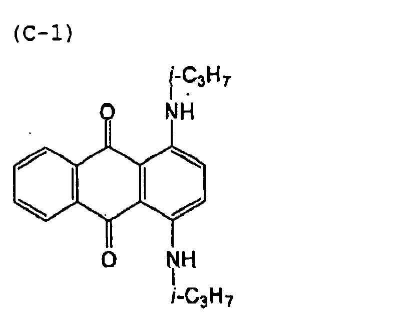

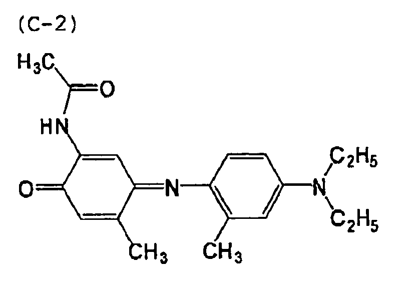

### (Transferable Protective Layer Laminates)

A coating liquid for a release layer, a protective layer and an adhesion layer, each having the composition below, were applied on the same polyester film used in fabricating of dye layer, and transferable protective layer laminates were prepared. Coating amount of the dry film of release layer was 0.3 g/m² and that of protective layer was 0.5 g/m² and that of adhesion layer was 2.2 g/m².

### Coating liquid for release layer:

| | |
|---|---|
| Modified cellulose resin (L-30, trade name by DAICEL CHEMICAL INDUSTRIES, LTD.) | 5.0 mas.pts. |
| Methyl ethyl ketone | 95.0 mas.pts. |
| Coating liquid for protective layer: | |
| Acrylate resin solution (40% solid constituent) (UNO-1, trade name by Gifu Ceramic Co., Ltd.) | 90 mas.pts. |
| Methanol/isopropanol (1/1 by mass) | 10 mas.pts. |

### Coating liquid for adhesion layer:

| | |
|---|---|
| Acrylate resin (Dianal BR-77, trade name by Mitsubishi Rayon Co. Ltd.) | 25 mas.pts. |
| | |
| UV absorbent (UV-1) | 1 mas.pts. |
| UV absorbent (UV-2) | 2 mas.pts. |
| UV absorbent (UV-3) | 1 mas.pts. |
| UV absorbent (UV-4) | 1 mas.pts. |
| PMMA fine particle (Poly Methyl Methacrylate fine particle) | 0.4 mas.pts. |
| Methyl ethyl ketone/toluene (2/1 by mass) | 70 mas.pts. |

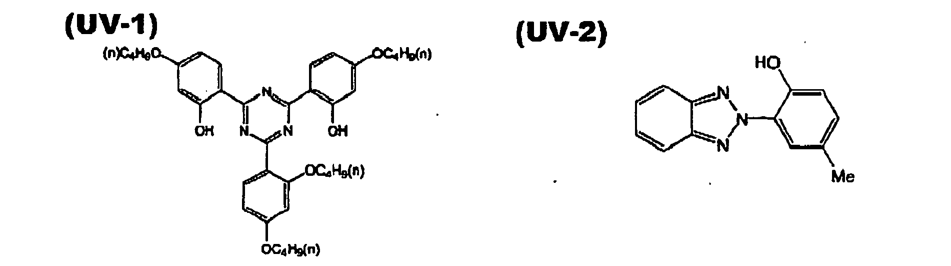

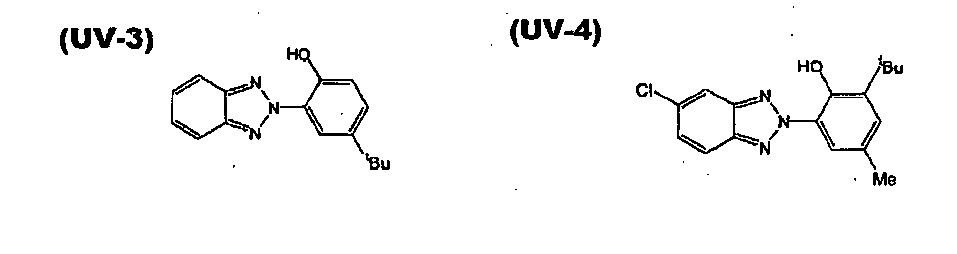

## Claims

1. A thermal transfer image-receiving sheet comprising, on a support, at least one image-receiving layer comprising a polymer latex having a polysiloxane structure of the following formula [1] in the side chain: 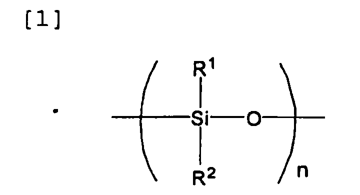 wherein R¹ and R² may be the same or different, each representing a hydrogen atom, an alkyl group or an aryl group; n indicates an integer of from 1 to 500, and wherein the sheet has a hollow particles-containing heat-insulating layer between the support and the image-receiving layer.

2. The thermal transfer image-receiving sheet according to claim 1, wherein the polymer latex has a repetitive unit derived from a monomer of the following formula [2]: 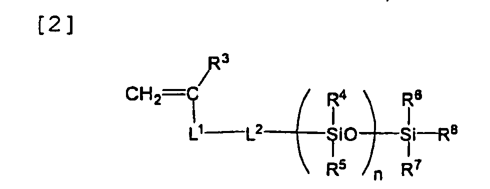 wherein R³ represents a hydrogen atom or a methyl group; L¹ represents a divalent linking group; L² represents a linking group having from 1 to 20 carbon atoms; R⁴ to R⁸ may be the same or different, each representing a hydrogen atom, an alkyl group or an aryl group; n indicates an integer of from 1 to 500.

3. The thermal transfer image-receiving sheet according to claim 2, wherein the monomer of formula [2] is a monomer of the following formula [3]: 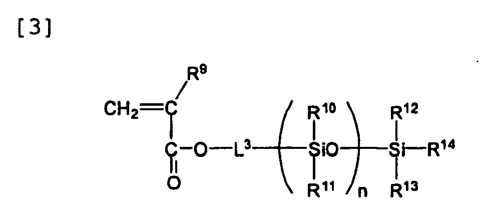 wherein R⁹ represents a hydrogen atom or a methyl group; L³ represents a linking group having from 1 to 20 carbon atoms; R¹⁰ to R¹⁴ may be the same or different, each representing a hydrogen atom, an alkyl group or an aryl group; n indicates an integer of from 1 to 500.

4. The thermal transfer image-receiving sheet according to any one of claims 1 to 3, wherein the polymer latex is a copolymer and contains a repetitive unit of the following formula [4] : 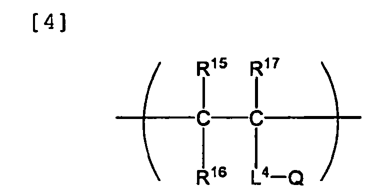 wherein R¹⁵, R¹⁶ and R¹⁷ each independently represent a hydrogen atom or a substituent; L⁴ represents a group selected from the following linking groups, or a divalent linking group formed by combining two or more of them; Q represents a carboxyl group (-COOH) or its salt, a sulfo group (-SO₃H) or its salt, or a phosphoryl group (-OPO₃H) or its salt,
(linking groups)
single bond, -O-, -CO-, -NR¹⁸-, -S-, -SO₂-, -P(=O) (OR¹⁹), alkylene group, arylene group,
in these, R¹⁸ represents a hydrogen atom, an alkyl group, a cycloalkyl group, an aryl group, or an aralkyl group, and R¹⁹ represents an alkyl group, a cycloalkyl group, an aryl group, or an aralkyl group.

5. The thermal transfer image-receiving sheet according to any one of claims 1 to 4, wherein the polymer latex is a copolymer prepared by copolymerizing a monomer mixture comprising a nitrile monomer, an aromatic vinyl monomer and a (meth)acrylic ester monomer as essential copolymerizable monomers.

## Patentansprüche

1. Wärmeübertragungsbild-Aufnahmeblatt, umfassend auf einem Träger mindestens eine Bildaufnahmeschicht, die einen Polymerlatex umfasst, welcher in einer Seitenkette eine Polysiloxanstruktur der folgenden Formel [1] aufweist: 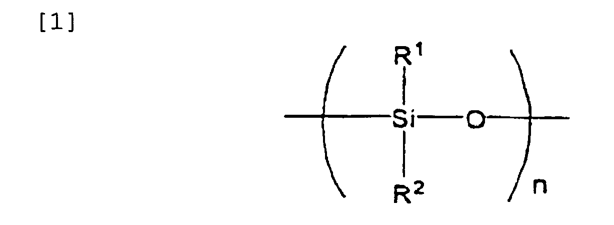 worin R¹ und R² gleich oder verschieden sein können und jeweils ein Wasserstoffatom, eine Alkylgruppe oder eine Arylgruppe darstellen; n eine ganze Zahl von 1 bis 500 bezeichnet, und worin das Blatt eine wärmeisolierende Schicht, die hohle Partikel enthält, zwischen dem Träger und der Bildaufnahmeschicht aufweist.

2. Wärmeübertragungsbild-Aufnahmeblatt gemäß Anspruch 1, worin der Polymerlatex eine Wiederholungseinheit aufweist, die sich aus einem Monomer der folgenden Formel [2] ableitet: 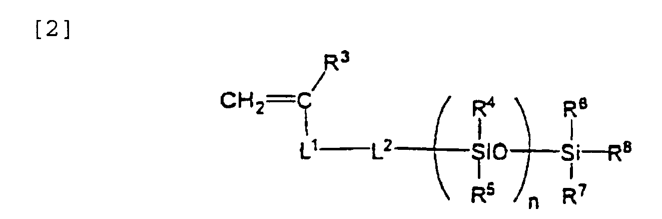 worin R³ ein Wasserstoffatom oder eine Methylgruppe darstellt; L¹ eine divalente Verknüpfungsgruppe darstellt; L² eine Verknüpfungsgruppe, die 1 bis 20 Kohlenstoffatome aufweist, darstellt; R⁴ bis R⁸ gleich oder verschieden sein können und jeweils ein Wasserstoffatom, eine Alkylgruppe oder eine Arylgruppe darstellen; und n eine ganze Zahl von 1 bis 500 bezeichnet.

3. Wärmeübertragungsbild-Aufnahmeblatt gemäß Anspruch 2, worin das Monomer der Formel [2] ein Monomer der folgenden Formel [3] ist: 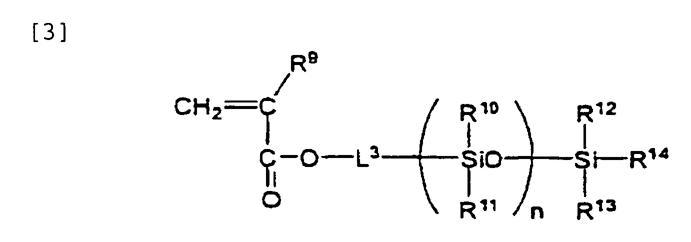 worin R⁹ ein Wasserstoffatom oder eine Methylgruppe darstellt; L³ eine Verknüpfungsgruppe, die 1 bis 20 Kohlenstoffatome aufweist, darstellt; R¹⁰ bis R¹⁴ gleich oder verschieden sein können und jeweils ein Wasserstoffatom, eine Alkylgruppe oder eine Arylgruppe darstellen; und n eine ganze Zahl von 1 bis 500 bezeichnet.

4. Wärmeübertragungsbild-Aufnahmeblatt gemäß irgendeinem der Ansprüche 1 bis 3, worin der Polymerlatex ein Copolymer ist und eine Wiederholungseinheit der folgenden Formel [4] enthält: 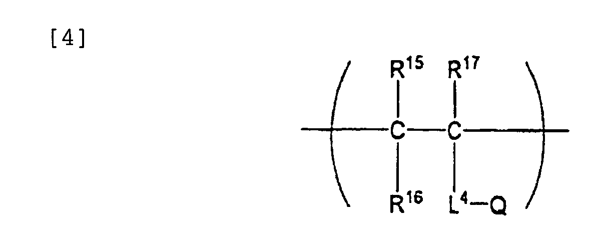 worin R¹⁵, R¹⁶ und R¹⁷ jeweils unabhängig voneinander ein Wasserstoffatom oder einen Substituenten darstellen; L⁴ eine Gruppe, ausgewählt aus den folgenden Verknüpfungsgruppen, oder eine divalente Verknüpfungsgruppe, die durch Kombinieren von zwei oder mehr von ihnen gebildet wird, darstellt; Q eine Carboxylgruppe (-COOH) oder ihr Salz, eine Sulfogruppe (-SO₃H) oder ihr Salz oder eine Phosphorylgruppe (-OPO₃H) oder ihr Salz darstellt,
(Verknüpfungsgruppen)
Einfachbindung, -O-, -CO-, -NR¹⁸-, -S-, -SO₂-, -P(=O)(OR¹⁹), Alkylengruppe, Arylengruppe,
wobei in diesen R¹⁸ ein Wasserstoffatom, eine Alkylgruppe, eine Cycloalkylgruppe, eine Arylgruppe oder eine Aralkylgruppe darstellt und R¹⁹ eine Alkylgruppe, eine Cycloalkylgruppe, eine Arylgruppe oder eine Aralkylgruppe darstellt.

5. Wärmeübertragungsbild-Aufnahmeblatt gemäß irgendeinem der Ansprüche 1 bis 4, worin der Polymerlatex ein Copolymer ist, hergestellt durch Copolymerisieren einer Monomermischung, die ein Nitrilmonomer, ein aromatisches Vinylmonomer und ein (Meth)acrylsäureester-Monomer als essentielle copolymerisierbare Monomere umfasst.

## Revendications

1. Feuille de réception d'image par transfert thermique comprenant, sur un support, au moins une couche réceptrice d'image comprenant un latex de polymère ayant une structure de polysiloxane de la formule suivante [1] dans la chaîne latérale : 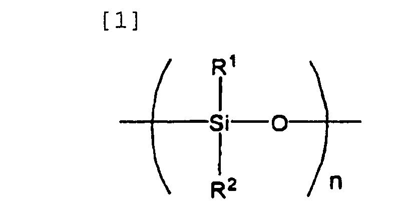 dans laquelle R¹ et R² peuvent être les mêmes ou différents, chacun représentant un atome d'hydrogène, un groupe alkyle ou un groupe aryle ; n indique un entier de 1 à 500, et dans laquelle la feuille a une couche isolant de la chaleur contenant des particules creuses entre le support et la couche réceptrice d'image.

2. Feuille réceptrice d'image par transfert thermique selon la revendication 1, dans laquelle le latex de polymère a une unité répétitive dérivée à partir d'un monomère de la formule suivante [2] : 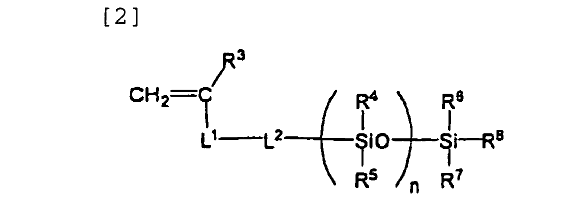 dans laquelle R³ représente un atome d'hydrogène ou un groupe méthyle ; L¹ représente un groupe de liaison divalente ; L² représente un groupe de liaison ayant de 1 à 20 atomes de carbone ; R⁴ à R⁸ peuvent être les mêmes ou différents, chacun représentant un atome d'hydrogène, un groupe alkyle ou un groupe aryle ; n indique un entier de 1 à 500.

3. Feuille réceptrice d'image par transfert thermique selon la revendication 2, dans laquelle le monomère de formule [2] est un monomère de la formule suivante [3] : 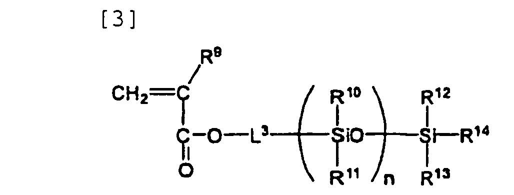 dans laquelle R⁹ représente un atome d'hydrogène ou un groupe méthyle ; L³ représente un groupe de liaison ayant de 1 à 20 atomes de carbone ; R¹⁰ à R¹⁴ peuvent être les mêmes ou différents, chacun représentant un atome d'hydrogène, un groupe alkyle ou un groupe aryle ; n indique un entier de 1 à 500.

4. Feuille réceptrice d'image par transfert thermique selon l'une quelconque des revendications 1 à 3, dans laquelle le latex de polymère est un copolymère et contient une unité répétitive de la formule suivante [4] : 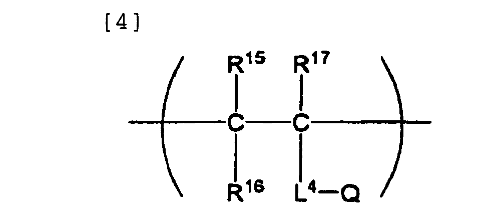 dans laquelle R¹⁵, R¹⁶ et R¹⁷ représentent chacun indépendamment un atome d'hydrogène ou un substituant ; L⁴ représente un groupe sélectionné parmi les groupes de liaison suivants, ou un groupe de liaison divalente formé en combinant deux ou plusieurs d'entre eux ; Q représente un groupe carboxyle (-COOH) ou son sel, un groupe sulfo (-SO₃H) ou son sel, ou un groupe phosphoryle (-OPO₃H) ou son sel,
(groupes de liaison)
liaison simple, -O-, -CO-, -NR¹⁸-, -S-, -SO₂-, -P (=O) (OR¹⁹), un groupe alkylène, un groupe arylène,
dans ceux-ci, R¹⁸ représente un atome d'hydrogène, un groupe alkyle, un groupe cycloalkyle, un groupe aryle, ou un groupe aralkyle, et R¹⁹ représente un groupe alkyle, un groupe cycloalkyle, un groupe aryle, ou un groupe aralkyle.

5. Feuille réceptrice d'image par transfert thermique selon l'une quelconque des revendications 1 à 4, dans laquelle le latex de polymère est un copolymère préparé en copolymérisant un mélange de monomères comprenant un monomère de nitrile, un monomère de vinyle aromatique et un monomère d'ester (méth)acrylique en tant que monomères essentiels copolymérisables.
